(19) **Europäisches Patentamt / European Patent Office / Office européen des brevets**

(11) **EP 3 971 255 A1**

(12) **EUROPEAN PATENT APPLICATION**

(43) Date of publication:
**23.03.2022 Bulletin 2022/12**

(21) Application number: **20306039.7**

(22) Date of filing: **16.09.2020**

(51) International Patent Classification (IPC):
***C09J 189/00*** (2006.01)

(52) Cooperative Patent Classification (CPC):
(C-Sets available)
**C09J 189/00** (Cont.)

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **EVERTREE**
**60280 Venette (FR)**

(72) Inventor: **The designation of the inventor has not yet been filed**

(74) Representative: **Santarelli**
**49, avenue des Champs-Elysées**
**75008 Paris (FR)**

(54) **ADHESIVE COMPOSITION COMPRISING HEAT TREATED DRY PLANT MEAL AND A WATER SOLUBLE PREPOLYMER AND/OR WATER SOLUBLE REACTIVE PREPOLYMER**

(57) The invention relates to a process for preparing an adhesive composition comprising a heat treated dry plant meal, said heat treated dry plant meal and relating dispersions, adhesive compositions, articles and uses of said heat treated dry plant meal.

**EP 3 971 255 A1**

(52) Cooperative Patent Classification (CPC): (Cont.)

C-Sets
**C09J 189/00, C08L 79/02**

**Description**

The present invention relates to a process for preparing an adhesive composition comprising a heat treated dry plant meal, said heat treated dry plant meal and relating dispersions, adhesive compositions, articles and uses of said heat treated dry plant meal. Adhesive compositions are extensively used in the industry, in particular, the wood product industry, to make composites.

For example, WO2011156380 describes an adhesive composition comprising a reactive prepolymer and ground plant meal.

However, the adhesive composition obtained usually have a high viscosity, which may result in processability problems, for example by preventing its use for applications such as spraying.

Therefore, there is a need for improving processability of eco-friendly adhesive compositions, in particular by decreasing its viscosity, without compromising the final properties of the article made therefrom. Furthermore, there is a need for improving processability of these adhesive compositions without decreasing the plant meal content. The inventors have surprisingly found that heat treatment of a dry plant meal before mixing it with a water soluble (reactive) prepolymer improves the processability of the resulting adhesive composition. In particular, at a same plant meal content, the resulting adhesive composition has a lower viscosity than when the plant meal was not heat treated. Therefore, in a first aspect, the invention relates to a process for preparing an adhesive composition comprising the steps of:

- providing a heat treated dry plant meal which is capable of reducing the viscosity of a dispersion in water of said heat treated dry plant meal compared to the same dispersion in water of the non heat treated dry plant meal, and
- mixing the heat treated dry plant meal with water and a water soluble prepolymer and/or a water soluble reactive prepolymer to provide an adhesive composition.

By "plant meal", it is meant a meal under a powder, pellet or flake form obtained from a plant or a part thereof, which can have been submitted to an extraction step such as, for example, a fat or protein extraction. In particular, the plant meal may be whole plant meal, defatted plant meal (such as solvent extracted plant meal), press cake (such as cold-press cake), protein isolate, protein concentrate or a mixture thereof. Preferably, the plant meal is a defatted plant meal (such as solvent extracted plant meal).

The solvent used to prepare the solvent extracted plant meal may be organic and/or aqueous, such as hexane or aqueous alcohol, preferably hexane.

By "protein isolate", it is meant a plant meal extract comprising at least 80 wt% proteins based on dry matter.

By "protein concentrate", it is meant a plant meal extract comprising at least 60 wt% and less than 80 wt% proteins based on dry matter.

Preferably, the plant meal is derived from corn, wheat, sunflower, cotton, castor, soy, camelina, flax, jatropha, mallow, peanuts, sugarcane bagasse, tobacco and/or a plant of the genus *Brassica* (such as rape plant, canola, and/or *Brassica carinata*).

More preferably, the plant meal is derived from corn, flax, soy, sunflower and/or a plant of the genus *Brassica* (such as rape plant, canola and/or *Brassica carinata*).

Still more preferably, the plant meal is selected from the group consisting of corn draff, flaxseed meal, soybean meal, sunflower seed meal, rapeseed meal (in particular rapeseed meal pellets), canola seed meal, rapeseed cold press cake, soy protein concentrate, soy protein isolate and *Brassica carinata* meal.

Even more preferably, the plant meal is sunflower meal or rapeseed meal, in particular rapeseed meal.

By "heat treated dry plant meal", it is meant that said heat treated dry plant meal is obtained by submitting a dry plant meal to a heat treatment (under dry conditions) at a temperature and during a treatment time sufficient to provide a heat treated dry plant meal which is capable of reducing the viscosity of a dispersion in water of said heat treated dry plant meal compared to the same dispersion in water of the non heat treated dry plant meal.

By "dry plant meal", it is meant a plant meal as described above and being under a dry form, i.e. not containing free water, such as not being in solution (e.g., aqueous solution), in particular, a plant meal having a dry content greater than or equal to 80 wt%, preferably, greater than or equal to 85 wt%, more preferably, between 88 wt% and 96 wt%. The dry content can be determined according to the first method set forth in Example 1.

By "capable of reducing the viscosity", it is meant that by comparing the viscosity of a first dispersion consisting of a dry plant meal (not subjected to a heat treatment) and water at a particular solid content, and of a second dispersion consisting of the dry plant meal that was heat treated and water at the same solid content and prepared in the same conditions (such as time, temperature, pressure, mixing conditions, for example as described in Example 2 "Preparation of a heat treated dry plant meal dispersion"), the relative viscosity of the second dispersion is less than the relative viscosity of the first dispersion, the latter being set to 100%. Preferably, the relative viscosity of the second dispersion is less than 80% of the first dispersion, more preferably, less than 50%, even more preferably, less than 25%, still more preferably, less than 15%.

It should be noted that the words "submitted" or "subjected" are used interchangeably throughout all the application.

By "prepolymer", it is meant a mixture of monomers and/or oligomers. It should be noted that the terms "resin" and "prepolymer" are used interchangeably all along this specification, depending on which term is most commonly used in the technical field; for example, polyamidoamine-epichlorohydrin (PAE) is mostly called a resin.

By "reactive prepolymer", it is meant a mixture of monomers and/or oligomers comprising reactive groups.

By "water soluble (reactive) prepolymer", it is meant a (reactive) prepolymer being soluble in water.

By "being soluble in water", it is meant that the water soluble (reactive) prepolymer has a water solubility equal to or greater than 1 g/L at a temperature of 23°C, preferably, equal to or greater than 30 g/L, more preferably, equal to or greater than 100 g/L. In the present application, temperatures are given according to STP.

Preferably, the water soluble (reactive) prepolymer is an epichlorohydrin-based prepolymer, a formaldehyde-based prepolymer, a polyethyleneimine-based prepolymer (PEI), an acrylic-based prepolymer, an alkyde-based prepolymer, a poly(vinyl-alcohol)-based prepolymer (PVOH), a poly(vinyl-pyrrolidone)-based prepolymer, a starch-based prepolymer, a polysaccharide-based prepolymer (such as dextrin-based prepolymer), a protein-based composition or a tannin-based composition.

More preferably, the water soluble (reactive) prepolymer is an epichlorohydrin-based prepolymer.

By "epichlorohydrin-based prepolymer", it is meant a prepolymer or mixture of prepolymers obtained from at least one monomer being epichlorohydrin.

Advantageously, the epichlorohydrin-based prepolymer is a polyamidoamine-epichlorohydrin (PAE) prepolymer (or resin), a polyalkylenepolyamine-epichlorohydrin resin, an amine polymer-epichlorohydrin resin, or a combination thereof.

Preferably, the epichlorohydrin-based prepolymer is a polyamidoamine-epichlorohydrin (PAE) resin.

By "formaldehyde-based prepolymer", it is meant a prepolymer or mixture of prepolymers obtained from at least one monomer being formaldehyde.

Advantageously, the formaldehyde-based prepolymer is a urea-formaldehyde resin, a melamine-formaldehyde resin, a melamine urea-formaldehyde resin, a phenolformaldehyde resin, a phenol-resorcinol-formaldehyde, or a combination thereof.

Advantageously, the dry plant meal is ground before, simultaneously and/or after the heat treatment, preferably, before the heat treatment.

In particular, the invention relates to a:

In a second aspect, the invention relates to a process for preparing an adhesive composition comprising the steps of:

- providing a dry plant meal heat treated at a temperature of at least 100°C, and
- mixing the heat treated dry plant meal with water and a water soluble prepolymer and/or a water soluble reactive prepolymer to provide an adhesive composition.

The above-mentioned definitions and preferred embodiments also apply to this process according to a second aspect of the invention, and in particular, those relating to the dry plant meal and the water soluble (reactive) prepolymer.

The heat treatment according to the invention may be static or dynamic, for example by using an oven or a pan dryer (such as a Guedu® dryer).

Preferably, the heat treatment is performed at a temperature of at least 115°C, more preferably at least 135°C, even more preferably, at least 150°C.

In particular, contrary to a heat treatment performed in liquid solution (e.g. aqueous solution), the use of a dry plant meal allows conducting the heat treatment at a temperature much higher than in an aqueous solution under atmospheric pressure, such as 115°C or 150°C.

Advantageously, the maximum temperature for the heat treatment is the ignition temperature of the plant meal, which depends on the plant meal and type of treatment (in cloud or layer). For example, the ignition temperature of rapeseed meal after 5 minutes of heat treatment is 215°C when rapeseed meal is in "thin" layer (for example, spread out on a plate), and 306°C when rapeseed meal is in "cloud" (i.e. in suspension in the air).

Advantageously, the dry plant meal comprises at least 15 wt% of proteins, on the total weight of the dry plant meal.

Preferably, the dry plant meal comprises at least 25 wt% of proteins, more preferably, at least 30 wt% of proteins, on the total weight of the dry plant meal.

Advantageously, the dry plant meal has a granulometry d50 of at least 20 $\mu$m. Preferably, the dry plant meal has a granulometry d50 of at least 100 $\mu$m.

Preferably, the dry plant meal has a granulometry d50 comprised between 20 $\mu$m and 500 $\mu$m, more preferably, between 30 $\mu$m and 300 $\mu$m, even more preferably, between 100 $\mu$m and 250 $\mu$m.

The granulometry d50 is well known by the skilled person as the maximum size of 50% of the smallest particles in weight, and can be measured with a granulometer, for example according to the method described in Example 1 "Particle size determination".

It will be noted that in the context of the present application, and unless otherwise stipulated, the ranges of values indicated are understood to be inclusive.

Advantageously, the dry plant meal is submitted to a heat treatment during at least 5 minutes.

Preferably, the dry plant meal is submitted to a heat treatment during at least 15 minutes, more preferably, at least 30 minutes.

Advantageously, the dry plant meal is submitted to a heat treatment during about 5 min at about 200°C, during about 15 min at about 175°C, during about 30 min at about 150°C or during about 45 min at about 120°C, preferably, during about 30 min at about 150°C.

By "about" a value, it is meant said value plus or minus 10%.

According to a particular embodiment, the dry plant meal is dry rapeseed meal subjected to a heat treatment during about 5 min at about 200 °C, during about 15 min at about 150°C or during about 15 min at about 120°C, preferably, during about 15 min at about 150°C.

According to another particular embodiment, the dry plant meal is dry sunflower seed meal subjected to a heat treatment during about 5 min at about 200 °C, during about 15 min at about 175°C or during about 30 min at about 150°C, preferably, during about 30 min at about 150°C.

Advantageously, the heat treated dry plant meal has a dry content greater than 96 wt%, preferably, greater than 98 wt%, more preferably, comprised between 99 wt% and 100 wt%. The dry content can be determined according to the first method set forth in Example 1.

Advantageously, the weight ratio of the heat treated plant meal / water soluble (reactive) prepolymer (dry/dry) is comprised between 0.1 and 100, preferably between 0.5 and 30, more preferably, between 1 and 8, still more preferably between 2 and 10, such as for example about between 3 and 7.

As mentioned above, the adhesive composition further comprises water. Advantageously, the heat treated dry plant meal represents at least 1 wt% of the total weight of the heat treated dry plant meal and water in the adhesive composition, preferably, at least 5 wt%, more preferably, at least 10 wt%, even more preferably, at least 20 wt%, still more preferably, at least 25 wt%, still even more preferably, at least 30 wt%, the heat treated dry plant meal weight being in dry weight. Advantageously, the heat treated dry plant meal represents between 1 wt% and 50 wt% of the total weight of the heat treated dry plant meal and water in the adhesive composition, preferably, between 5 wt% and 45 wt%, more preferably, between 10 wt% and 40 wt% such as between 20 wt% and 40 wt%, between 25 wt% and 35 wt%, or between 30 wt% and 35 wt%, the heat treated dry plant meal weight being in dry weight.

In a preferred embodiment, the adhesive composition further comprises glycerol.

In this preferred embodiment, the weight ratio of glycerol / water soluble (reactive) prepolymer (dry/dry) is preferably comprised between 0.1 and 100, preferably, between 0.5 and 50, more preferably, between 2 and 20, even more preferably, between 5 and 10, such as for example, about 9.

In this preferred embodiment, the weight ratio of glycerol / heat treated dry plant meal (dry/dry) is preferably comprised between 0.2 and 4, more preferably, between 0.5 and 3, even more preferably, between 1.0 and 2.0, such as for example, 1.5.

Preferably, the heat treated dry plant meal is added under a powder form to a mixture of the water soluble (reactive) prepolymer, optionally glycerol, and water.

The heat treated dry plant meal may also be added to the adhesive composition under the form of a heat treated dry plant meal dispersion in water. In this case, the process according to the invention further comprises a step of mixing the heat treated dry plant meal with water to provide a heat treated dry plant meal dispersion.

Advantageously, the heat treated dry plant meal dispersion has a solid content of at least 10 wt%, preferably, at least 20 wt%, more preferably, at least 25 wt%, even more preferably, at least 30 wt%.

By "solid content" of a plant meal dispersion, it is meant the percentage of dry solids contained in said dispersion. For example, if a dispersion is prepared by mixing plant meal and water, the residual water already contained the plant meal is taken in consideration for calculating the solid content of the dispersion.

Advantageously, the heat treated dry plant meal dispersion has a solid content comprised between 10 wt% and 40 wt%, preferably, comprised between 20 wt% and 40 wt%, more preferably, comprised between 25 wt% and 35 wt%, even more preferably, comprised between 30 wt% and 35 wt%.

Advantageously, the heat treated dry plant meal dispersion has a viscosity at 20°C of less than 500 mPa.s, preferably, of less than 400 mPa.s, more preferably, of less than 300 mPa.s, even more preferably, of less than 200 mPa.s.

The skilled person knows how to measure viscosity. Preferably, the viscosity can be measured as described in Example 1.

Furthermore, all the viscosity measurements are done less than 15 min after stopping mixing a composition comprising the heat treated dry plant meal and water.

According to a preferred embodiment, the heat treated dry plant meal dispersion has the above described viscosity and a solid content comprised between 20 wt% and 40 wt%, preferably, comprised between 25 wt% and 35 wt%, more preferably, comprised between 30 wt% and 35 wt%.

Advantageously, the adhesive composition has a viscosity at 20°C of less than 500 mPa.s, preferably, of less than 400 mPa.s, more preferably, of less than 300 mPa.s, even more preferably, of less than 200 mPa.s.

According to a preferred embodiment, the adhesive composition has the above described viscosity and comprises between 1 wt% and 50 wt% of heat treated dry plant meal, preferably, between 5 wt% and 45 wt%, more preferably, between 20 wt% and 40 wt%, even more preferably, between 25 wt% and 35 wt%, still more preferably, between 30 wt% and 35 wt%, the percentages being indicated with respect to the total weight of the heat treated dry plant meal and water in the adhesive composition, and the heat treated dry plant meal weight being in dry weight.

Preferably, the pH of the adhesive composition is comprised between 3 and 12, more preferably, between 5 and 9. In particular, the pH of the adhesive composition is adjusted depending on the optimum pH of the water soluble (reactive) prepolymer. For example, the pH of an adhesive composition comprising PAE is preferably about 8.

The heat treated dry plant meal dispersion and/or the adhesive composition may also comprise one or more additives.

Exemplary additives include clays, in particular, an intercalated clay, partially exfoliated clay, exfoliated clay, for example montmorillonite, cellulose nanoparticles, catalysts, tacking agents, extenders, fillers, viscosifying agents, surfactants, adhesion promoters, antioxidants, antifoaming agents, antimicrobial agents, antibacterial agents, fungicides, pigments, inorganic particulates (e.g., titanium dioxide, yellow iron oxide, red iron oxide, black iron oxide, zinc oxide, aluminum oxide, aluminum trihydrate, calcium carbonate), gelling agents, aereosolozing agents, cross-linking agents, agents that improve moisture resistance, pH modulators, composite-release promoters, formaldehyde scavenging agents, fire retardants, wetting agents, and wood preservatives.

The additive may be a water-dispersible additive or a water-soluble additive. Water-soluble additives include hydroxyl-functional or amine-functional compounds (such as glycerin, propylene glycol, polypropylene glycol, polyethylene glycol, trimethylol propane and its adducts, phenols, polyphenols, etc.). One benefit of using glycerin and various low-viscosity polyols is that they allow less water to be used in the adhesive composition. The benefit comes in addition to heat treated dry plant meal in an adhesive composition. It allows to further increase the solid content versus unheated treated dry plant meal. Reducing the amount of water, while retaining a low-viscosity adhesive composition, desirably reduces the risk that the composite formed therefrom is damaged by steam generated during formation of the composite at high temperature.

The additive may also be a non-volatile (e.g., having a boiling point of greater than about 180°C at atmospheric pressure), inert viscosity-reducing diluent.

The additive may be an agent that improves moisture-resistance, a composite-release promoter (such as a composite-release promoter selected from the group consisting of a $C_{10-25}$ alkanoic acid, a salt of a $C_{10-25}$ alkanoic acid, a $C_{10-25}$ alkenoic acid, a salt of an $C_{10-25}$ alkenoic acid, and a silicone).

In particular, the additive may be a fire retardant, wood preservative, antimicrobial agent, antibacterial agent or fungicide, any of which may be in the form of nanoparticles.

Advantageously, if the adhesive comprises one or more additives, each additive present in the adhesive composition is independently present in an amount ranging from 0.001 % (w/w) to about 20% (w/w), from 0,01 % (w/w) to about 15% (w/w) from 0.1% (w/w) to about 0.1% (w/w) to about 20% (w/w), from 0.1% (w/w) to about 10% (w/w), from 0.5% (w/w) to about 3% (w/w), from 1% (w/w) to about 20% (w/w), from 1% (w/w) to about 10% (w/w), from 1% (w/w) to about 5% (w/w), from 1% (w/w) to about 3% (w/w) or from 5% (w/w) to about 10% (w/w). In certain embodiments, such as where the additive is a fire retardant, the additive may be present in the adhesive composition in an amount ranging from about 1% (w/w) to about 40% (w/w), from about 10%(w/w) to about 40% (w/w), from about 20% (w/w) to about 40% (w/w), or from about 25% (w/w) to about 35% (w/w).

Exemplary classes of additives are described in more detail below.

Intercalated Clay

Intercalated clays can be obtained from commercial sources or prepared by exposing a clay to an intercalating agent. Exemplary types of clay that may be converted to intercalated form include, for example, smectite clays, illite clays, chlorite clays, layered polysilicates, synthetic clays and phyllosilicates. Exemplary specific clays that may be converted to intercalated form include, for example, montmorillonite (e.g., sodium montmorillonite, magnesium montmorillonite and calcium montmorillonite), beidellite, pyrophyllite, talc, vermiculite, sobockite, stevensite, svinfordite, sauconite, saponite, volkonskoite, hectorite, nontronite, kaolinite, dickite, nacrite, halloysite, hisingerite, rectorite, tarosovite, ledikite, amesite, baileychlore, chamosite, clinochlore, kaemmererite, cookeite, corundophilite, daphnite, delessite, gonyerite, nimite, odinite, orthochamosite, penninite, pannantite, rhipidolite, prochlore, sudoite, thuringite, kanemite, makatite, ilerite, octosilicate, magadiite and kenyaite. In certain embodiments, the clay converted to intercalated form is montmorillonite.

Exemplary intercalating agents include, for example, quaternary amine compounds (such as a tetra-alkylammoniun salt), polymers (e.g., a polycaprolactone, maleated polyethylene, or maleated polypropylene) an acrylic monomer, phosphonium compounds, arsonium compounds, stibonium compounds, oxonium compounds, sulfonium compounds, polypropene, fatty acid esters of pentaerythritol, a steroyl citric acid ester and alcohols (such as aliphatic alcohols, aromatic alcohols (e.g., phenols), aryl substituted aliphatic alcohols, alkyl substituted aromatic alcohols, and polyhydric alcohols).

Intercalated clays can be characterized by, for example, the following physical properties: interlayer spacing, d-spacings, clay particle size, particle size distribution, peak degradation temperature, and thickness of layers. Exemplary physical property features for intercalated clays contemplated to be amenable for use in the present invention include, for example, one or more of the following: (i) an intercalated clay having an interlayer spacing of about 0.5 Å to about 100 Å (or about 1 Å to about 20 Å), (ii) a mean particle size of about 1 $\mu$m to about 150 $\mu$m (or about 20 $\mu$m to about 100 $\mu$m), (iii) a particle size distribution where about 90 percent to about 50 percent of the intercalated clay particles have a particle size of from about 20 $\mu$m to about 100 $\mu$m (or about 85 percent to about 65 percent of the intercalated clay particles have a particle size of about 20 $\mu$m to about 100 $\mu$m), (iv) a peak degradation temperature of about 200 °C to about 600 °C (or from about 300 °C to about 500 °C), and/or (v) layers in the intercalated clay have a thickness of about 0.5 Å to about 100 Å (or about 5 Å to about 50 Å).

In certain other embodiments, the intercalated clay is intercalated montmorillonite having a particle size of less than about 500 nm, or less than about 100 nm. In certain other embodiments, the intercalated clay is intercalated montmorillonite having a particle size of about 60 nm to about 400 nm.

The clay (e.g., an intercalated clay) may be surface treated with an organic compound, such as a hydrophobic organic compound or hydrophilic organic compound, in order to promote dispersion of the clay in a formulation, such as an adhesive composition described herein. Surface treatment methods and compositions are described in the literature and are contemplated to be amenable for use in the present invention. Different intercalated clays may impart different performance properties to the adhesive composition. Accordingly, in certain embodiments, the intercalated clay is an intercalated smectite. In certain other embodiments, intercalated clay is a smectite that has been intercalated with a quaternary ammonium compound. In certain other embodiments, the intercalated clay is an intercalated montmorillonite. In yet other embodiments, the intercalated clay is montmorillonite intercalated with a dimethyl-di($C_{14-18}$) alkyl ammonium salt.

Exfoliated Clay & Partially Exfoliated Clay

Exfoliated clay or a partially exfoliated clay can be prepared by exposing an intercalated clay to exfoliation conditions using procedures described in the literature. One procedure for preparing a partially exfoliated clay is to subject an intercalated clay to high shear mixing and/or sonication (e.g., using ultrasound) until the intercalated clay has partially exfoliated. The procedure may be performed by placing the intercalated clay (e.g., quaternary amine intercalated montmorillonite) in a hydrophobic liquid medium (such as mineral oil, soy oil, castor oil, silicone oil, a terpene (e.g., limonene), plant oil alkyl esters (e.g., soy methyl ester and canola methyl ester), mixtures thereof (e.g., a mixture of a silicone oil and limonene),etc.) to form a mixture, and then subjecting the mixture to high shear mixing and/or ultrasound until the intercalated clay has partially exfoliated. Partial exfoliation occurs when clay platelets separate from the intercalated clay particles. The intercalated clay may be added to the adhesive composition, and the adhesive composition is subjected to exfoliation conditions to generate the partially exfoliated clay in situ.

An exfoliated clay can be prepared by exposing an intercalated clay to high shear mixing and/or sonication (e.g., using ultrasound) until substantially all (e.g., greater than 90% w/w, 95% w/w, or 98% w/w) the intercalated clay has exfoliated. The exfoliation procedure can be performed by placing the intercalated clay (e.g., quaternary amine intercalated montmorillonite) in a hydrophobic liquid medium (such as mineral oil, soy oil, castor oil, silicone oil, a terpene (e.g., limonene), plant oil alkyl esters (e.g., soy methyl ester and canola methyl ester), mixtures thereof (e.g., a mixture of a silicone oil and limonene), etc.) to form a mixture, and then subjecting the mixture to high shear mixing and/or sonication (e.g., using ultrasound) until substantially all (e.g., greater than 90% w/w, 95% w/w, or 98% w/w) the intercalated clay has exfoliated. Alternatively, the intercalated clay may be added to the adhesive composition, and the adhesive composition is subjected to exfoliation conditions to generate the exfoliated clay in situ. Alternatively, a clay (such as sodium montmorillonite) may be added to an adhesive composition, together with a quaternary ammonium compound, and optionally together with a satisfactory oil carrier (e.g., one that has the ability to solvate the quaternary compound), and the resulting adhesive composition is subjected to conditions to intercalate the clay and to generated the exfoliated clay or partially exfoliated clay in situ. In addition, if so desired, the quaternary ammonium compound can be pre-dissolved in the oil carrier before it is added to the adhesive composition together with a clay.

Exemplary partially exfoliated clays contemplated to be amenable for use in present invention include partially exfoliated forms of smectite clay, illite clay, chlorite clay, layered polysilicates, synthetic clay and phyllosilicates. Exemplary specific partially exfoliated clays contemplated to be amenable for use in present invention include partially exfoliated forms of, for example, montmorillonite (e.g., sodium montmorillonite, magnesium montmorillonite, and calcium montmorillonite), beidellite, pyrophyllite, talc, vermiculite, sobockite, stevensite, svinfordite, sauconite, saponite, volkonskoite, hectorite, nontronite, kaolinite, dickite, nacrite, halloysite, hisingerite, rectorite, tarosovite, ledikite, amesite, baileychlore, chamosite, clinochlore, kaemmererite, cookeite, corundophilite, daphnite, delessite, gonyerite, nimite, odinite, orthochamosite, penninite, pannantite, rhipidolite, prochlore, sudoite, thuringite, kanemite, makatite, ilerite, octosilicate, magadiite and kenyaite. In certain embodiments, the partially exfoliated clay is partially exfoliated clay montmorillonite.

A partially exfoliated clay can be characterized by, for example, the amount of clay particles that are in the form of platelets. In certain embodiments, about 0.1% w/w to about 40% w/w, about 0.1% w/w to about 20% w/w, about 0.1% w/w to about 10% w/w, about 0.1% w/w to about 5% w/w, about 5% w/w to about 20% w/w of the clay particles are in the form of platelets. In certain embodiments, about 0.1% w/w to about 40% w/w of the clay particles are in the form of platelets having a size of about 1 Å to about 50 Å, about 30 Å to about 50 Å or about 5 Å to about 20 Å.

Exemplary exfoliated clays contemplated to be amenable for use in present invention include exfoliated forms of smectite clay, illite clay, chlorite clay, layered polysilicates, synthetic clay and phyllosilicates. Exemplary specific exfoliated clays contemplated to be amenable for use in present invention include exfoliated forms of, for example, montmorillonite (e.g., sodium montmorillonite, magnesium montmorillonite, and calcium montmorillonite), beidellite, pyrophyllite, talc, vermiculite, sobockite, stevensite, svinfordite, sauconite, saponite, volkonskoite, hectorite, nontronite, kaolinite, dickite, nacrite, halloysite, hisingerite, rectorite, tarosovite, ledikite, amesite, baileychlore, chamosite, clinochlore, kaemmererite, cookeite, corundophilite, daphnite, delessite, gonyerite, nimite, odinite, orthochamosite, penninite, pannantite, rhipidolite, prochlore, sudoite, thuringite, kanemite, makatite, ilerite, octosilicate, magadiite and kenyaite. In certain embodiments, the exfoliated clay is an exfoliated smectite. In certain embodiments, the exfoliated clay is exfoliated montmorillonite.

An exfoliated clay can be characterized by, for example, the size of platelets and the aspect ratio of platelets. In certain embodiments, the size of the platelets is about 1 Å to about 50 Å, about 30 Å to about 50 Å or about 5 Å to about 20 Å. In certain embodiments, the aspect ratio of the platelets is about 100 to about 10000, about 100 to about 5000 or about 200 to about 2000. In certain other embodiments, the exfoliated clay has a mean particle size of less than about 500 nm, less than 100 nm or less than 25 nm. In certain other embodiments, the exfoliated clay has a mean particle size of from about 60 nm to about 400 nm, about 50 nm to about 300 nm, about 40 nm to about 200 nm or about 20 nm to about 150 nm.

In certain other embodiments, a partially exfoliated clay is formed by exposing a clay to an effective amount of a protein component (e.g., dry plant meal or heat treated dry plant meal) to form a mixture and subjecting the mixture to exfoliation conditions, such as high shear mixing and/or sonication. In certain other embodiments, an exfoliated clay is formed by exposing a clay to an effective amount of protein component (e.g., dry plant meal or heat treated dry plant meal) to form a mixture and subjecting the mixture to exfoliation conditions, such as high shear mixing and/or sonication.

Cellulose Nanoparticles

Cellulose nanoparticles can be added to the adhesive composition to achieve certain performance properties, such as to provide an adhesive composition with increased toughness and/or bond strength. Cellulose nanoparticles can be obtained from commercial sources or isolated from plant-based fibers by acid-hydrolysis. Cellulose nanoparticles can be characterized by, for example, the size of the nanoparticle, the cross-sectional shape of the nanoparticle, and the cross-sectional length and aspect ratio of the nanoparticle. Accordingly, in certain embodiments, the cellulose nanoparticle has a size of from about 1 nm to about 2000 nm, about 10 nm to about 1000 nm, about 10 nm to about 500 nm or about 10 nm to about 200 nm. In certain embodiments, the cross-sectional shape of the nanoparticle may be triangular, square, pentagonal, hexagonal, octagonal, circular, or oval. In certain other embodiments, the average cross-sectional length of the cellulose nanoparticle is about 0.1 nm to about 100 nm, or about 1 nm to about 10 nm.

One type of cellulose nanoparticles that may provide certain advantages are cellulose nanofibers. Exemplary cellulose nanofibers are described in, for example, U.S. Patent Application Publication Nos. 2010/0233481, 2010/0240806 and 2010/0282422.

Catalyst

A catalyst may be added to the adhesive composition to facilitate polymerization. Exemplary catalysts include, for example, a primary amine, a secondary amine, a tertiary amine, an organometallic compound, or a combination thereof. Exemplary primary amines include, for example, methylamine, ethylamine, propylamine, cyclohexylamine, and benzylamine. Exemplary secondary amines include, for example, dimethylamine, diethylamine, and diisopropylamine. Exemplary tertiary amines include, for example, diazabicyclooctane (Dabco), triethylamine, dimethyl benzylamine, bis-dimethylaminoethyl ether, tetramethyl guanidine, bis-dimethylaminomethyl phenol, 2,2'-dimorpholinodiethyl ether, 2-(2-dimethylaminoethoxy)-ethanol, 2-dimethylaminoethyl-3-dimethylaminopropyl ether, bis-(2-diaminoethyl)-ether, N,N-dimethyl piperazine, N-(2-hydroxyethoxyethyl)-2-azanorbornane, Tacat DP-914 (Texaco Chemical), Jeffcat®, N,N,N,N-tetramethyl butane-1,3 -diamine, N,N,N,N-tetramethyl propane- 1,3 -diamine, N,N,N,N-tetramethyl hexane-1,6-diamine, 2,2'-dimorpholinodiethyl ether (DMDEE), or a mixture thereof. Exemplary organometallic compounds include, for example, di-n-octyl tin mercaptide, dibutyl tin maleate, diacetate, dilaurate, dichloride, bis-dodecyl mercaptide, tin(II)acetate, ethyl hexoate and diethyl hexoate, $Fe^{3+}$ 2,4-pentanedionate (FeAcAc) or lead phenyl ethyl dithiocarbamate.

In certain other embodiments, the catalyst is a transition metal acetylacetonate, e.g., an acetylacetonate compound comprising iron, copper, or nickel. In certain embodiments, the transition metal acetylacetonate comprises a tertiary amine, e.g., 2,2'-dimorpholino diethyl ether.

The amount of catalyst used in the adhesive composition can be varied in order to optimize the features of the adhesive composition. In certain embodiments, the catalyst is present in less than 1% (wt/wt), 0.5% (wt/wt) or 0.1% (wt/wt) of the adhesive composition. In certain other embodiments, the catalyst is present in a range from 0.001% (wt/wt) to 0.75% (wt/wt), 0.001% (wt/wt) to 0.01% (wt/wt), 0.01% (wt/wt) to 0.05% (wt/wt) or 0.05% (wt/wt) to 0.5% (wt/wt) of the adhesive composition.

Tacking Agent

Exemplary tacking agents include, for example, glycerin, corn syrup, soy oil, a poly($C_2$-$C_6$) alkylene, mineral oil, an ethylene/propylene/styrene copolymer, a butylene/ethylene/styrene copolymer, or a mixture of one or more of the foregoing. Other exemplary tacking agents are copolymers that have a low glass transition temperature (Tg) (e.g., a latex-based, acrylic copolymer with a Tg of less than about 0°C, and preferably less than about -20 °C). In certain embodiments, the additive is polybutene. In certain embodiments, the polybutene has a weight average molecular weight of from about 200 g/mol to about 20000 g/mol, from about 200 g/mol to about 10000 g/mol, from about 200 g/mol to about 5000 g/mol, from about 200 g/mol to about 2000 g/mol, from about 200 g/mol to about 1000 g/mol, from about 500 g/mol to about 2000 g/mol, or from about 500 g/mol to about 1000 g/mol. Other tacking agents include a solid selected from the group consisting of a terpene resin, a rosin ester derivative, and a hydrocarbon-based derivative. When the tacking agent is a solid, the solid tacking agent can be pre-melted and dispersed in water by means of the heat treated dry plant meal, or the solid tacking agent can be ground and dispersed as fine particulates directly into the adhesive composition.

Extender

Exemplary extenders include, for example, inert extenders or active extenders. In certain embodiments, the inert extender is vegetable particulate matter, dibasic esters, propylene carbonate, non-reactive modified aromatic petroleum hydrocarbons, soy oil, castor oil, and in general any non-active hydrogen containing liquid that can be incorporated into an isocyanate based adhesive. Another inert extender or is any non-active hydrogen containing solid that is soluble, e.g., soluble in oil or soluble in water. The active extender can be a pyrrolidone monomer or polymers, an oxizolidone monomer or polymers, an epoxidized oil, or an unsaturated oil, such as linseed oil. Another active extender is a vinyl monomer or mixture of vinyl monomers.

Surfactants & Adhesion Promoters

Exemplary surfactants include, for example, monomeric types, polymeric types, or mixtures thereof. Exemplary adhesion promoters include, for example, organosilanes and titanates.

Antimicrobial Agent

Antimicrobial agents known in the art that do not substantially react with the water soluble (reactive) prepolymer are contemplated for use in the adhesive compositions and composites described herein. One exemplary antimicrobial agent is polyalkylene glycol polymers, such as polypropylene glycol.

Crosslinking Agent

In other embodiments, the additive can be a crosslinking agent, for example, a crosslinking agent that can be used to bond lignocellulosic material to glass. Exemplary crosslinking agents include an organosilane, such as dimethyldichlorosilane (DMDCS), alkyltrichlorosilane, methyltrichlorosilane (MTCS), N-(2-aminoethyl)-3-aminopropyl trimethoxysilane (AAPS), or a combination thereof. In other embodiments the heat treated dry plant meal is combined with an organosilane to form an adhesive for bonding one or more substrates together in any combination, said substrates including glass, paper, wood, ceramic, steel, aluminum, copper, brass, etc. The term "organosilane" refers to any group of molecules including monomers, hydrolyzed monomers, hydrolyzed dimers, oligomers, and condensation products of a trialkoxysilane having a general formula: $(RO)_3Si-R'$ where R is preferably a propyl, ethyl, methyl, isopropyl, butyl, isobutyl, sec-butyl, t-butyl or acetyl group, and R' is an organofunctional group where the functionality may include an aminopropyl group, an aminoethylaminopropyl group, an alkyl group, a vinyl group, a phenyl group, a mercapto group, a styrylamino group, a methacryloxypropyl group, a glycidoxy group, an isocyante group, or others.

Similarly, a bis-trialkoxysilane having the general formula $(RO)_3Si-R'-Si(OR)_3$ can also be employed as an "organosilane" either alone or in combination with a trialkoxysilane, where R is preferably a propyl, ethyl, methyl, isopropyl, butyl, isobutyl, sec-butyl, t-butyl or acetyl group, and R is a bridging organofunctional residue which may contain functionality selected from the group consisting of amino groups, alkyl groups, vinyl groups, phenyl groups, mercapto groups, and others. Similarly, a tetraalkoxysilane having the general formula $(RO)_4Si$ can also be employed as an "organosilane" either alone or in combination with a trialkoxysilane or a bis-trialkoxysilane, where R is preferably a propyl, ethyl, methyl, isopropyl, butyl, isobutyl, sec -butyl, t-butyl or acetyl group.

Agent that Improves Moisture-Resistance

Agents that improve moisture-resistance refer to those materials that, when added to adhesive compositions described herein, improve the ability of a wood composite formed from the adhesive to be resistant to water, i.e., not absorb water. Exemplary types of agents that improve moisture resistance include fluorinated polyol compounds, silicones, siloxanes (including functionalized siloxane polymers, such as hydroxy-terminated siloxane polymers or hydroxyl alkyl siloxane polymers), polyolefin polymers, wax (e.g., fatty acids (such as an alkyl carboxylic acid), salts of a fatty acid (e.g., an alkali metal salt of an alkyl carboxylic acid), esters of a fatty acid (e.g., an alkyl ester of a carboxylic acid, an aryl ester of a carboxylic acid, an alkyl ester of an alkanoic acid, or an aryl ester of an alkanoic acid), fatty alcohols, mixtures of hydrophobic hydrocarbons, water-based emulsions containing hydrophobic hydrocarbons dispersed therein, a hydrocarbon wax, a fluoroalkylphosphate wax, a fluorinated hydrocarbon wax, and a fluoroalkyl functionalized wax), and hydrophobic oils. Another agent that improves moisture-resistance is a fluorinated silicone. When an agent that improves moisture-resistance is present in an adhesive composition, it is desirably present in an amount effective to increase moisture resistance (e.g., an increase in moisture resistance of at least about 2%, 5%, 10%, or 20% compared to the moisture resistance of a composite formed from an adhesive composition lacking the agent that improves moisture-resistance).

Agents that improve moisture-resistance may be present in the final composite at a weight percent in the range of about 0.01% (w/w) to about 5% (w/w), about 0.01% (w/w) to about 2% (w/w), about 0.01% (w/w) to about 1% (w/w), about 0.01% (w/w) to about 0.5% , about 0.1% (w/w) to about 2% (w/w), (w/w), about 0.1% (w/w) to about 1% (w/w) or about 0.5% (w/w) to about 1% (w/w).

One exemplary fluorinated polyol compound is FluoroLink D-10 fluorinated polyol that is commercially available from Solvay Solexis, Inc. Exemplary silicones include Dow Corning FS-1265 Fluid, 300 cST (Trifluoropropyl Methicone) from Dow Corning), and T-Sil- 601 1 SE Emulsion (60% Solids), from Siovation, Inc. which is a emulsion containing 60% w/w silicones. The silicone may be organically modified, such as $C_{20-24}$Alkyl Methicone, $C_{24-28}$ Alkyl Methicone, $C_{30-45}$ Alkyl Methicone, Stearyl Dimethicone, Biphenyl Dimethicone, Stearoxy Dimethicone, $C_{20-24}$Alkyl Dimethicone, or $C_{24-28}$Alkyl Dimethicone.

Exemplary types of functionalized siloxane polymers include (1) a hydroxy- terminated siloxane polymer such as hydroxy-terminated polydimethylsiloxane (e.g., T-Sil-80, a linear hydroxy terminated polydimethylsiloxane from Siovation, Inc.), (2) a hydroxyl alkyl polydimethylsiloxane (e.g., Tego Protect-5000 functionalized silicone fluid commercially available from Evonik Tego Chemie GmbH), and (3) a fluorinated siloxane.

Exemplary waxes include Hexion EW-58H; BE Square 165 Amber Petroleum Macrocrystalline Wax commercially available from Baker Hughes, Inc., which is a mixture comprising paraffinic, isoparaffinic, and naphthenic hydrocarbons; Masurf FS 115 Emulsion (a fluoroalkylphosphate wax dispersion in water- 28% Solids) commercially available from Mason Chemical Company; camauba wax; candelilla wax; japan wax; beeswax; rice bran wax; montan wax; paraffin; ceresin; lanolin; ozokerita; slack wax (which is semi-refined wax having an oil content up to about 30 mass percent, and often produced by chilling and solvent filter-pressing wax distillate); polyethylene wax; a fatty acid or salt thereof (e.g., $C_{10-25}$ alkanoic acid, a salt of a $C_{10-25}$ alkanoic acid, a $C_{10-25}$ alkenoic acid, a salt of an $C_{10-25}$ alkenoic acid; such as stearic acid, zinc stearate, or lauric acid), a fatty ester (e.g., an ester of an $C_{10-25}$ alkanoic acid or $C_{10-25}$alkenoic acid); or fatty alcohol (e.g., $C_{10-25}$ hydroxy alkane or $C_{10-25}$ hydroxy alkene).

Exemplary hydrophobic polymers include a polyolefin (e.g., polyethylene, polypropylene, polybutylene, polystyrene, copolymers of the foregoing, polyethylene/polyvinyl acetate copolymer, and polyethylene/polyacrylic acid copolymer).

Exemplary hydrophobic oils include soy lecithin, castor oil, and a fluorinated hydrocarbon liquid.

Another agent that improves moisture resistance is a mixture of a silicone and a terpene compound. An exemplary silicone is Tego Protect-5000 functionalized silicone fluid sold by Evonik Tego Chemie GmbH. Exemplary terpene compounds contemplated for use include terpene compounds that are a solid at room temperature, a liquid at room temperature, and/or have a molecular weight of less than about 2000 g/mol, about 1000 g/mol, about 500 g/mol, or about 200 g/mol. In certain embodiments, the terpene compound is limonene. In certain embodiments, the agent that improves moisture resistance is a mixture of Tego Protect- 5000 functionalized silicone fluid and limonene.

In certain embodiments, the agent that improves moisture-resistance is a polymer agent that improves moisture-resistance, a wax agent that improves moisture-resistance, or a mixture thereof. In certain other embodiments, the agent that improves moisture-resistance is a silicone, a siloxane, a fluorinated polyol, a fluoroalkyl phosphate ester, a fluoroalkyl carboxylic ester, a salt of a fluoroalkanoic acid, a wax that improves moisture-resistance, or a mixture thereof. In certain other embodiments, the agent that improves moisture-resistance is a wax that improves moisture-resistance, such as a mixture of hydrophobic hydrocarbons, water-based emulsions containing hydrophobic hydrocarbons dispersed therein, a fluoroalkylphosphate wax, a fluorinated hydrocarbon wax, or a fluoroalkyl functionalized wax. In certain other embodiments, the agent that improves moisture-resistance is a silicone, a siloxane, a fluorinated polyol, a fluoroalkyl phosphate ester, or a fluoroalkyl carboxylic ester. In certain other embodiments, the agent that improves moisture-resistance is a silicone, a siloxane, a fluorinated polyol, a fluoroalkyl phosphate ester, a fluoroalkyl carboxylic ester, a salt of a fluoroalkanoic acid, or a mixture thereof. In certain other embodiments, the agent that improves moisture- resistance is a silicone, a siloxane, a fluorinated polyol, a fluoroalkyl phosphate ester, a fluoroalkyl carboxylic ester, or a wax that improves moisture-resistance. In certain other embodiments, the agent that improves moisture-resistance is a fluorinated polyol, a silicone, a siloxane, or wax that improves moisture-resistance. In yet other embodiments, the agent that improves moisture-resistance is a mixture comprising hydrophobic hydrocarbons.

The term "fluoroalkyl phosphate ester" as used herein refers to a compound comprising a phosphate group bonded to at least one fluoroalkyl group, such as represented by $P(O)(OR^1)(OR^2)_2$, wherein $R^1$ is a fluoroalkyl group, and $R^2$ represents independently for each occurrence hydrogen, alkyl, fluoroalkyl, aryl, aralkyl, heteroalkyl, heteroaryl, heteroaralkyl, an alkali metal, ammonium, or a quaternary amine, or two occurrences of $R^2$ are taken together to form an alkaline earth metal.

## pH Modulator

The pH modulator can be an acid or base. In certain embodiments, the pH modulator is an alkali metal hydroxide (e.g., sodium hydroxide or calcium hydroxide) or an alkali metal salt of a carboxylate organic compound (e.g., an alkali metal salt of citrate, such as disodium citrate).

## Composite-Release Promoter

The composite-release promoter acts to facilitate release of the wood composite from the press apparatus used to make the composite. In the absence of a composite-release promoter, certain composites may stick to the press apparatus, making it difficult to separate the composite from the press apparatus. The composite-release promoter solves this problem by facilitating release of the wood composite. Exemplary composite-release promoters include silicones (e.g., silicones described above), fatty acids, a salt of a fatty acid, waxes, and amide compounds. Exemplary fatty acids or salts thereof include a $C_{10-25}$ alkanoic acid, a salt of a $C_{10-25}$ alkanoic acid, a $C_{10-25}$ alkenoic acid, a salt of an $C_{10-25}$ alkenoic acid; e.g., stearic acid, zinc stearate, lauric acid, oleic acid or a salt thereof (such as an alkali metal salt of oleic acid, such as potassium oleate). It is understood that a mixture of two or more of the aforementioned exemplary composite-release promoters can also be used in the adhesive compositions herein. An exemplary amide compound is N,N'-ethylenebisstearamide. Exemplary waxes include those described above for the agent that improves moisture resistance, and in particular, Hexion EW-58H; E Square 165 Amber Petroleum Macrocrystalline Wax commercially available from Baker Hughes, Inc.; and Masurf FS 115 Emulsion (28% Solids) commercially available from Mason Chemical Company. One additional advantage of the heat treated dry plant meal in the adhesive composition is that it can facilitate dispersion of the composite-release promoter - this feature allows less composite-release promoter to be used in the adhesive composition and final composite product. Reducing the amount of composite-release promoter is advantageous for agents that are relatively more expensive, such as certain silicone composite-release promoters.

In certain embodiments, the composite-release promoter is a silicone.

Further, in certain embodiments, a composite-release promoter is present in the final composite at a weight percent in the range of about 0.01% (w/w) to about 5% (w/w), about 0.01% (w/w) to about 2% (w/w) or about 0.01% (w/w) to about 1% (w/w).

## Formaldehyde Scavenging Agent

A variety of formaldehyde scavenging agents are described in the literature and are contemplated to be amenable to the present invention. Different formaldehyde scavenging agents have different reactivity profiles, and a particular formaldehyde scavenging agent (e.g., $H_2NC(O)NH_2$, $Me_2NC(O)NH_2$, or $CH_3CH_2NH_2$) can be selected to optimize the performance properties of the adhesive composition and/or binder composition formed by the adhesive. Accordingly, in certain embodiments, the formaldehyde scavenging agent has the formula $RNH_2$, $R_2NH$, $RC(O)NH_2$, $R(H)C(O)NH_2$, $R_2NC(O)NH_2$, or $R(H)C(O)N(H)R$, wherein R represents independently for each occurrence H, alkyl, aryl, or aralkyl. In certain embodiments, the formaldehyde scavenging agent has the formula $RN(H)C(O)N(H)R$, wherein R represents independently for each occurrence H, alkyl, aryl, or aralkyl. In certain other embodiments, the formaldehyde scavenging agent is $H_2NC(O)NH_2$, $H_2NC(O)N(H)Me$, $MeN(H)C(O)N(H)Me$, $H_2NC(O)N(CH_3)_2$, $CH_3C(O)NH_2$, $CH_3CH_2C(O)NH_2$, $CH_3NH_2$, $CH_3CH_2NH_2$, $(CH_3)_2NH$ or $(CH_3CH_2)_2NH$. In still other embodiments, the formaldehyde scavenging agent is $H_2NC(O)NH_2$.

The term "alkyl" as used herein refers to a saturated straight or branched hydrocarbon, such as a straight or branched group of 1-12, 1-10, or 1-6 carbon atoms, referred to herein as $C_1$-$C_{12}$ alkyl, $C_1$-$C_{10}$ alkyl, and $C_1$-$C_6$ alkyl, respectively. Exemplary alkyl groups include, but are not limited to, methyl, ethyl, propyl, isopropyl, 2-methyl-1-propyl, 2-methyl-2-propyl, 2-methyl-1-butyl, 3-methyl-1-butyl, 2-methyl-3-butyl, 2,2-dimethyl-1-propyl, 2-methyl-1-pentyl, 3-methyl-1-pentyl, 4-methyl-1-pentyl, 2-methyl-2-pentyl, 3-methyl-2-pentyl, 4-methyl-2-pentyl, 2,2-dimethyl-1-butyl, 3,3-dimethyl-1-butyl, 2-ethyl-1-butyl, butyl, isobutyl, t-butyl, pentyl, isopentyl, neopentyl, hexyl, heptyl, octyl, etc.

The term "aryl" as used herein refers to refers to a mono-, bi-, or other multi- carbocyclic, aromatic ring system. Unless specified otherwise, the aromatic ring is optionally substituted at one or more ring positions with substituents selected from alkanoyl, alkoxy, alkyl, alkenyl, alkynyl, amido, amidino, amino, aryl, arylalkyl, azido, carbamate, carbonate, carboxy, cyano, cycloalkyl, ester, ether, formyl, halogen, haloalkyl, heteroaryl, heterocyclyl, hydroxyl, imino, ketone, nitro, phosphate, phosphonato, phosphinato, sulfate, sulfide, sulfonamido, sulfonyl and thiocarbonyl. The term "aryl" also includes polycyclic ring systems having two or more cyclic rings in which two or more carbons are common to two adjoining rings (the rings are "fused rings") wherein at least one of the rings is aromatic, e.g., the other cyclic rings may be cycloalkyls, cycloalkenyls, cycloalkynyls, and/or aryls. Exemplary aryl groups include, but are not limited to, phenyl, tolyl, anthracenyl, fluorenyl, indenyl, azulenyl, and naphthyl, as well as benzo-fused carbocyclic moieties such as 5,6,7,8-tetrahydronaphthyl. In certain embodiments, the aryl group is not substituted, i.e., it is unsubstituted.

The term "aralkyl" as used herein refers to an aryl group having at least one alkyl substituent, e.g. aryl-alkyl-. Exemplary aralkyl groups include, but are not limited to, arylalkyls having a monocyclic aromatic ring system, wherein the ring comprises 6 carbon atoms. For example, "phenylalkyl" includes phenylC4 alkyl, benzyl, 1-phenylethyl, 2-phenylethyl, etc.

The amount of formaldehyde scavenging agent in the adhesive formulation can adjusted to optimize the performance properties of the adhesive composition and/or binder composition formed by the adhesive. In certain embodiments, the mole ratio of formaldehyde scavenging agent to reactive prepolymer is at least about 0.1 : 1, at least about 0.5: 1, at least about 1 : 1, at least about 2: 1, at least about 3: 1, at least about 4: 1 or at least about 5: 1. In certain embodiments, the mole ratio of formaldehyde scavenging agent to reactive prepolymer is in the range of from about 0.01 : to about 0.5: 1, from about 0.5: 1 to about 5: 1, or from about 1 : 1 to about 4: 1. In still other embodiments, the mole ratio of formaldehyde scavenging agent to reactive prepolymer is at least 0.05: 1. In still other embodiments, the mole ratio of formaldehyde scavenging agent to reactive prepolymer is at least 5: 1.

In certain embodiments, the formaldehyde scavenging agent is present in an amount from about 1 % to about 50 % (w/w), from about 1 % to about 30 % (w/w), from about 1 % to about 20 % (w/w), from about 5 % to about 50 % (w/w), from about 5 % to about 30 % (w/w), from about 5 % to about 20 % (w/w), from about 10 % to about 50 % (w/w), from about 10 % to about 30 % (w/w) or from about 10 % to about 20 % (w/w) of the adhesive composition. In certain other embodiments, the formaldehyde scavenging agent is present in an amount from about 1 % to about 50 % (w/w) of the adhesive composition. In still other embodiments, the formaldehyde scavenging agent is present in an amount from about 2 % to about 30 % (w/w) of the adhesive composition.

Fire Retardants

Exemplary fire retardants include, for example, (i) phosphoric acid or a salt thereof, such as a mono-ammonium phosphate, di-ammonium phosphate, ammonium poly -phosphate, melamine phosphate, guanidine phosphate, urea phosphate, alkali metal phosphate, and alkaline earth metal phosphate, (ii) a halogenated phosphate compound, (iii) a phosphate ester, such as tri-o-cresyl phosphate and tris(2,3-dibromopropyl) phosphate, (iv) a chlorinated organic compound, such as a chlorinated hydrocarbon or chlorinated paraffin, (iv) a brominated organic compound, such as a brominated hydrocarbon, bromo-bisphenol A, tetrabromobisphenol A (TBBPA), decabromobiphenyl ether, octabromobiphenyl ether, tetrabromobiphenyl ether, hexabromocyclododecane, bis(tetrabromophthalimido) ethane, tribromophenol, andbis(tribromophenoxy) ethane, (v) a brominated oligomer or brominated polymer, such as TBBPA polycarbonate oligomer, brominated polystyrene, and TBBPA epoxy oligomer, (vi) a borate compound, such as an alkali metal borate, ammonium borate, or mixture comprising one or more of borax, boric acid, boric oxide, and disodium octoborate, (vii) aluminium materials, such as aluminium trihydrate and aluminium hydroxide, (viii) an alkaline earth metal hydroxide, such as magnesium hydroxide, (ix) an alkali metal bicarbonate, such as sodium bicarbonate, (x) an alkaline earth metal carbonate, such as calcium carbonate, (xi) antimony trioxide, (xii) hydrated silica, (xiii) hydrated alumina, (xiv) dicyandiamide, (xv) ammonium sulfate, and (xvi) a mixture of guanylurea phosphate and boric acid, such as those described in International Patent Application Publication No. WO 02/070215, (xvii) graphite, (xviii) melamine, and (xix) a phosphonate compound, such as diethyl-N,N-bis(2-hydroxyethyl) aminoethyl phosphonate; dimethyl-N,N-bis(2-hydroxyethyl) aminomethyl phosphonate; dipropyl-N,N-bis(3-hydroxypropyl) aminoethyl phosphonate; and dimethyl-N,N-bis(4-hydroxybutyl) aminomethyl phosphonate, such as described in U.S. Patent No. 6,713, 168.

In certain embodiments, the fire retardant is (i) phosphoric acid or a salt thereof, such as a mono-ammonium phosphate, di-ammonium phosphate, ammonium poly -phosphate, melamine phosphate, guanidine phosphate, urea phosphate, alkali metal phosphate, and alkaline earth metal phosphate, (ii) a phosphate ester, such as tri-o-cresyl phosphate and tris(2,3- dibromopropyl) phosphate, aluminium trihydrate and aluminium hydroxide, (iii) an alkaline earth metal hydroxide, such as magnesium hydroxide, (iv) an alkali metal bicarbonate, such as sodium bicarbonate, (v) antimony trioxide, or (vi) hydrated alumina. In certain other embodiments, the fire retardant is Colemanite ($CaB_3O_4(OH)_3$ - $H_2O$).

Wood Preservatives

Exemplary wood preservatives include, for example, (i) chromated copper arsenate (CCA), (ii) alkaline copper quaternary, (iii) copper azole, (iv) a borate preservative compound, (v) a sodium silicate-based preservative compound, (vi) a potassium silicate-based preservative compound, (vii) a bifenthrin preservative compound, (viii) a coal-tar creosote, (ix) linseed oil, (x) tung oil, and (xi) an insecticide, such as an organochloride compound, organophosphate compound, carbamate compound, pyrethroid, neonicotinoid, and ryanoid.

The invention further relates to a process for preparing an article with the adhesive composition prepared according to the invention, further comprising a step of contacting the adhesive composition with a lignocellulosic material to provide lignocellulosic material impregnated with the adhesive composition.

By "lignocellulosic material", it is meant a lignocellulosic material different from the heat treated dry plant meal, in particular straw, paper, cardboard, wood strands, wood veneer, wood particles and/or wood fibers, preferably, wood strands, wood veneer, wood particles and/or wood fibers, more preferably, wood strands, wood particles and/or wood fibers. The wood particles can be chips, flakes, sawdust, powder or any other waste based on wood originating from a sawmill.

Preferably, the wood is pine wood, spruce wood, birch wood and/or beech wood, more preferably, the wood is spruce wood.

By "contacting" the adhesive composition with a lignocellulosic material, it is meant preferably applying by brush or roller, mixing or spraying, more preferably, mixing or spraying, even more preferably, spraying. Indeed, by heat treating the dry plant meal, the viscosity of the adhesive composition is reduced allowing the spraying of the composition. Advantageously, the process according to the invention further comprises a step of providing an article by curing of the adhesive composition. Preferably, the curing is implemented by heating at a curing temperature comprised between 120°C and 250°C, more preferably, between 150°C and 230°C, even more preferably, between 180°C and 210°C. Preferably, the article is provided after placing the lignocellulosic material impregnated with the adhesive composition into a mold, followed by pressing and heating at the curing temperature described before.

Preferably, the article is a wood board, more preferably, the article is plywood, oriented strand board (OSB), particleboard or fiberboard, even more preferably, the article is oriented strand board (OSB), particleboard or fiberboard.

In a first embodiment, the invention relates to a heat treated dry plant meal obtained by subjecting a dry plant meal to a heat treatment at a temperature and during a treatment time sufficient to reduce the viscosity of a dispersion of said heat treated dry plant meal in water compared to the same dispersion of the non heat treated dry plant meal with water. In a second embodiment, the invention is also directed to a heat treated dry plant meal capable of reducing the viscosity of a dispersion in water of said heat treated dry plant meal compared to the corresponding dispersion in water of the non heat treated dry plant meal.

In a third embodiment, the invention relates to a heat treated dry rapeseed or canola meal obtained by subjecting a dry rapeseed or canola meal to a heat treatment at a temperature of at least 115°C.

Advantageously, the heat treatment is performed at least 15 min, preferably, at least 30 min.

Advantageously, the heat treatment is performed during about 5 min at about 200 °C, during about 15 min at about 150°C or during about 15 min at about 120°C, preferably, during about 15 min at about 150°C.

In a fourth embodiment, the invention relates to a heat treated dry plant meal obtained by subjecting a dry plant meal to a heat treatment at a temperature of at least 150°C.

Preferably, this heat treated dry plant meal is heat treated dry sunflower, rapeseed or canola meal, more preferably, sunflower meal.

Advantageously, the heat treatment is performed at least 15 min, preferably, at least 30 min, more preferably, at least 45 min.

Advantageously, the heat treatment is performed during about 5 min at about 200 °C, during about 15 min at about 175°C or during about 30 min at about 150°C, preferably, during about 30 min at about 150°C.

The heat treated dry plant meal of the first, second, third and fourth embodiment is advantageously as described above, in particular with respect to the type of plant meal and its protein content.

The invention further relates to a heat treated dry plant meal dispersion comprising a heat treated dry plant meal and water and having a viscosity at 20°C of less than 500 mPa.s.

The heat treated dry plant meal is as described above. In particular, the heat treated dry plant meal is obtained by heating the dry plant meal as described above, in particular with respect to the type of plant meal and its protein content.

The heat treated dry plant meal dispersion may comprise one or more additives as described above.

Preferably, the heat treated dry plant meal dispersion consists of a heat treated dry plant meal, water and optionally one or more additive(s) as described above.

Advantageously, the heat treated dry plant meal dispersion has a solid content as described above.

Preferably, the heat treated dry plant meal dispersion has a viscosity at 20°C of less than 400 mPa.s, more preferably, of less than 300 mPa.s, even more preferably, of less than 200 mPa.s.

According to a preferred embodiment, the heat treated dry plant meal dispersion has the above described viscosity and a solid content comprised between 25 wt% and 40 wt%, preferably, comprised between 27 wt% and 35 wt%, more preferably, comprised between 30 wt% and 35 wt%.

The invention also provides an adhesive composition comprising a heat treated dry plant meal, water and a water soluble (reactive) prepolymer.

The adhesive composition and its ingredients (heat treated dry plant meal, water soluble (reactive) prepolymer, optional glycerol, etc.) are as described above, in particular with respect to the ingredient contents and viscosity.

More particularly, the heat treated dry plant meal is as described above. In particular, the heat treated plant meal is obtained from the dry plant meal as described above, in particular with respect to the type of plant meal and its protein content. Still more particularly, the heat treated dry plant meal is a heat treated dry plant meal according to any one of the first to the fourth embodiments.

Also, the water soluble (reactive) prepolymer is as described above. In particular, the water soluble (reactive) prepolymer is more preferably an epichlorohydrin-based prepolymer, even more preferably, a polyamidoamine epichlorohydrin resin.

The adhesive composition may be provided under a two-part form, wherein one part comprises the water soluble (reactive) prepolymer, water and optionally glycerol, and the other part comprises the heat treated dry plant meal.

Preferably, upon curing, the adhesive composition forms a solid binder.

Advantageously, the adhesive composition according to the invention is sprayable.

The invention also relates to the use of a heat treated dry plant meal for improving processability of an adhesive composition.

The heat treated dry plant meal is as described above. In particular, the heat treated dry plant meal is advantageously a heat treated dry plant meal according to any one of the first to the fourth embodiments.

Preferably, the processability is improved by decreasing viscosity of the adhesive composition.

By "decreasing the viscosity of the adhesive composition", it is meant that the viscosity of the adhesive composition comprising the heat treated dry plant meal is inferior to the same adhesive composition (i.e. at the same dry matter content) comprising the same dry plant meal not heat treated. By "inferior to", it is meant a decrease of viscosity of preferably at least 20%.

More preferably, the processability is improved by decreasing viscosity at 20°C of the adhesive composition to less than 500 mPa.s, preferably, less than 400 mPa.s, more preferably, less than 300 mPa.s, even more preferably, less than 200 mPa.s.

Furthermore, the invention relates to the use of a heat treated dry plant meal for stabilizing an adhesive composition comprising water and a water soluble (reactive) prepolymer.

The heat treated dry plant meal is as described above. In particular, the heat treated dry plant meal is advantageously a heat treated dry plant meal according to any one of the first to the fourth embodiments.

By "stabilizing" an adhesive composition, it is meant in particular that no change of appearance by visual inspection can be observed and/or no unpleasant odor appears at least 4 days after preparing said adhesive composition, preferably at least 5 days, such as for example, after 6 days.

The invention will be better understood in the light of the following examples, given by way of illustration, with reference to:

- Figure 1 that is a scale for evaluating the visual aspect of a dispersion of a plant meal and water;
- Figure 2 that is a diagram illustrating the viscosity of dispersions prepared from water and ground rapeseed meal subjected to different thermal treatments, depending on the solid content of the dispersions expressed in weight percentage (% dispersion);

- Figure 3 that is a diagram illustrating the viscosity of dispersions at a solid content of 23 wt% prepared from water and ground rapeseed meal of two different origins (GCXX-12/18 or LMXX-26/18) subjected or not to a thermal treatment, depending on the granulometry d(50);
- Figure 4 that is a diagram illustrating the viscosity of dispersions prepared at a laboratory scale from water and ground rapeseed meal of two different origins (GCXX-12/18 or LMXX-26/18) subjected or not to a thermal treatment and having a granulometry d(50) of 30µm, depending on the solid content of the dispersions;
- Figure 5 that shows pictures of dispersions prepared from water and non-treated rapeseed meal after 4 days (left picture), and from water and heat-treated rapeseed meal after 7 days (right picture);
- Figure 6 that is a diagram illustrating the concentration of microorganisms per mL of a dispersion at a solid content of 20 wt% prepared from water and heat treated rapeseed meal, depending on the days after dispersing;
- Figure 7 that is a diagram illustrating the viscosity of dispersions prepared from water and ground rapeseed meal (heat treated or not), depending on the solid content of the dispersions;
- Figure 8 that is a diagram illustrating the viscosity of dispersions prepared at a pilot scale from water and ground rapeseed meal (optionally heat treated before grinding), depending on the solid content of the dispersions;
- Figure 9 that is a diagram illustrating the viscosity of dispersions at a solid content of 20 wt% prepared from water and ground sunflower meal (heat treated or not), depending on the pH of the dispersions;
- Figure 10 that is a diagram illustrating the viscosity of dispersions at a solid content of 30 wt% prepared from water and ground rapeseed meal (heat treated or not), depending on the pH of the dispersions;
- Figure 11 that is a diagram illustrating the internal bonding (IB) of particle boards made from adhesive compositions comprising untreated or heat treated ground plant material of different origin;
- Figure 12 that is a diagram illustrating the thickness swelling (TS) of particle boards made from adhesive compositions comprising untreated or heat treated ground plant material of different origin.

**Example 1: Materials and methods**

**Materials**

All raw material used are listed in Table 1.

Table 1: description of the raw material used in the Examples, the percentages being weight percentages

| Name | Protein content | Supplier | Manufacturing process |
|---|---|---|---|
| Wheat draff | 27% | Aso Nutrition | By-product from the manufacture of alcohol by distillation from wheat |
| Corn draff | 21% | Aso Nutrition | By-product from the manufacture of alcohol by distillation from corn |
| linseed meal | 34% | Saipol | From crushing process of flaxseed |
| Soy meal | 51% | ADM | From crushing process of soy seeds extracted with hexane |
| Sunflower meal | 37% | Saipol Bassens | From crushing process of sunflower seeds with hexane |
| Rapeseed meal (pellets) | 35% | Saipol | From crushing process of rapeseed seeds with hexane |
| Rapeseed cold-press cake (expeller) | 18% | Saipol | From crushing process of rapeseed seeds with no hexane |
| Soy protein concentrate | 70% | Efos | |
| Soy protein isolate ISP920H | 90% | Efos | |
| Brassica Carinata meal | 40% | Saipol | From crushing process of Brassica Carinata seeds with hexane |

**Product characterization**

Dry content

The material is placed in an aluminum cup with an amount of about 1.5g. The exact weight is measured with an analytical balance with 4 digits after the decimal point. Then the cup is placed in a fan ventilated oven at 105°C for 3hours. Fan & valve aperture are set at 100% to accelerate water evaporation. Dry content is obtained by measuring the weight of the cup after being removed from the oven immediately or after conditioning in a desiccator to get sample at room temperature. Calculation of dry content is obtained by the calculation of material loss thanks to (1) and (2):

$$m_{loss} = m_0 - m_1 \qquad (1)$$

Where $m_0$ and $m_1$ are respectively the weight of the cup before being placed in the oven and after being placed in the oven.

$$DC\% = 1 - \frac{m_{loss}}{m_{sample}} \qquad (2)$$

Where DC%, $m_{loss}$ and $m_{sample}$ are respectively the dry content, the weight of material loss and the weight of sample tested ($m_0 - m_{cup}$).
An alternative method consists in using a moisture analyzer (Sartorius M50) to get the dry content or the moisture content. It enables to have the "atro" mode (i.e. moisture content in weight parts over dry composition) required for wood-based panel manufacturing. This method is also faster (i.e. few minutes versus 3 hours) but allows to test only one sample per round. The moisture analyser is preferably used for wood DC% determination prior to wood panel making.

Particle size determination

The particle size of ground samples is measured using a Malvern laser granulometer Mastersizer 3000. Sample material is injected through the dry injection tool of the analyzer. Refractive index and model used are respectively 1.52 and Mie to determine the particle size density profile. The main value of interest is the d50 previously described.

Viscosity measurement

The viscosity of the dispersions and adhesive compositions was measured by using a rheometer (Haake MARS 40 by Thermo Scientific) equipped with a Pelletier heating/cooling system. The measurement device is a plate/plate system (20mm diameter, 1mm gap). Measurement is done with a dynamic mode (shear rate of 10 s$^{-1}$, 50% shear and 20°C temperature). The viscosity value was automatically determined after 5 minutes of measurement using Rheowin Job manager version 4.81.0000 (Haake Mess Tech, Germany).

Panels characterization

Laboratory boards (200x200mm) are cut to get samples for water resistance and internal bonding (IB). Water resistance and IB are done respectively following standard ISO EN 317:1993 and ISO EN 319:1993 to get Thickness Swelling (TS) and IB. Apparatus used for all these measurements is the Imal (Italia), IBX700 model. The test results are mean values with their standard deviation.

Raw material microbiological stability

In order to quantify microbiological stability, three tests were implemented to follow the evolution of the odor, surface appearance and biological activity of dispersions prepared from plant meals. At laboratory scale, approximately 300g of dispersion were prepared in a polypropylene beaker of 400mL and closed by a parafilm to avoid water evaporation.
The three tests were monitored over time.

a) Odor

The perception of odor is subjective, and the following scale was used to rank odor level:

- 1: Standard odor of a fresh dispersion;
- 2: Slightly modified odor but not unpleasant;
- 3: Strongly modified odor but not unpleasant;
- 4: Slightly modified unpleasant odor;
- 5: Strongly modified unpleasant odor.

b) Visual appearance

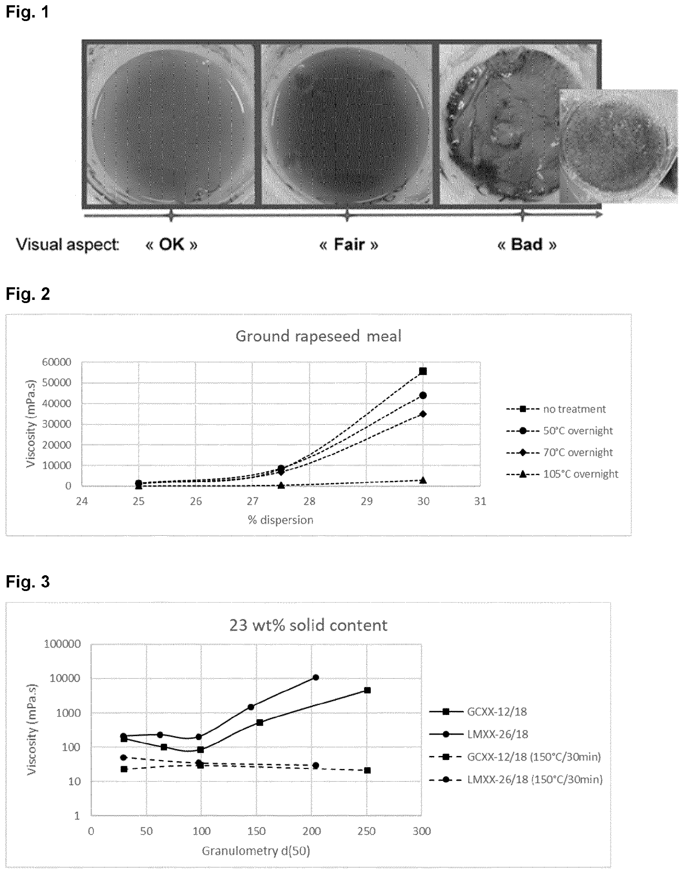

A scale for the appearance was implemented in order to have a qualitative evaluation of the visual evolution and is provided on Figure 1.

For the "OK" sample, the dispersion of plant material is identical to T0 (fresh dispersion), in static state, with a liquid top layer having a light brown color.

For the "Fair" sample, the dispersion begins to contain solid aggregated (molds) on the top.

For the "Bad" sample, significant development of microorganisms (molds + bacteria) on the surface can be seen.

c) ATP-metry

The last test to quantify the microbiological activity of the dispersion over time is ATP-metry.

ATP (adenosine triphosphate) is a molecule synthesized in all living cells (bacteria, yeasts, mammalian cells ...). When ATP breaks down in cells, it releases energy used by "cellular machines", allowing them to work. It is their reserve of energy.

ATP can be quantified by a bioluminescence reaction, i.e. by light production caused by the chemical reaction between ATP and an enzymatic complex, luciferin-luciferase. This enzymatic complex, in presence of oxygen and magnesium, transforms the energy released by the hydrolysis of ATP into light. This light is measured by a luminometer, and the amount of light produced is proportional to the amount of ATP present in the measured sample, and thus living cells. Method, material and reagents used to realize this test were provided by GLBiocontrol (France).

The method follows these steps: approximately 30g of dispersion were placed in a tube and centrifuged (model Sorvall ST8 from Thermo Scientific) at 3000rpm for 10minutes. This step was repeated twice with the supernatant for solid/liquid separation. A volume V of the final supernatant (no more than 2mL) was placed in a sterile syringe including a sterile $0.45\mu m$ porosity filter screwed at the output. The plunger of the syringe was then pushed to allow the sample to pass through the filter. Then 4 droplets of the reagent Dendridiag® IW (from GLBiocontrol, France) were sucked up by the syringe through the filter and then the contents of the syringe were pushed into a measuring tube provided for a luminometer. This tube was then tested into a luminometer Kikkoman PD30 to obtain the value R1 (in RLU: Relative Light Unit). Then, one droplet of the reagent named Standard 1000 (from GLBiocontrol) was added into the tube, and a new measurement with the luminometer is carried out to obtain the value R2 (in RLU). Finally, by using the equations described below, the bacteria equivalent concentration per milliliter was obtained.

$$Standard = \frac{R2-R1}{1000}$$

$$[ATP] = \frac{R1}{Standard \times V}$$

With:

Standard = Value of the standard (RLU/pg ATP)
R1 = result on sample (RLU)
R2 = result on sample + standard (standard addition method) (RLU)
V = filtered volume in milliliter
[ATP] = ATP concentration (pg ATP/mL)
1 picogramme (pg) of ATP is about 1000 bacteria.

**Example 2: Preparation of adhesive compositions from heat ground dry material at laboratory and pilot scales**

**Preparation of heat treated ground dry material at laboratory scale**

At the laboratory scale, raw material was ground using a laboratory grinder from Retsch model ZM 200. This equipment allows to get well define granulometry profile characterized by the d50 value (maximum size of 50% of the smallest particles in weight).

A ring sieve (80, 120 and 200 μm openings) is used to tailored particles size distribution and especially the d50 value in combination with mill speed (12000 and 18000 rpm). Higher is the sieve opening higher is the d50 and the lower is the speed, the higher is the d50.

Thermal treatment was applied on raw materials in an oven (UF75, Memmert, Germany) by controlling temperature and treatment time. To ensure the homogeneity of the treatment in the oven, raw materials were spread in thin layers (9 ± 1 mm) on plates. Once the treatment is done, plates containing treated material were removed from the oven to let them cool down and equilibrate under room condition, and then was kept in a closed container for further analysis and use.

**Preparation of heat treated ground dry material at pilot scale**

Two different processes were considered.

Grinding and thermal treatment:
Materials, in pellet shape, were first ground at the desired particle size (d50). Pilot plant is equipped with an impact mill grinder including a classifier from Hosokawa, model 200ZPS. After the classifier, the product is moved to Guedu dryer for thermal treatment. Guedu dryer is from De Dietrich Process System with a tank of 1600L using a heating system with a double jacket and a powder impeller. The impeller ensures good product recirculation in the dryer and avoid particles agglomeration. The thermal treatment is realized by a temperature ramp and mixing speed.

Thermal treat and grinding:
In this variant, pellets are transferred to the Guedu dryer first for thermal treatment with the same protocol (heating ramp). This step allows to treat material before grinding and contributes to a first particle size reduction (pellet deagglomeration). Then the heat treated pellets are transferred to the mill (model 200ZPS, Hosokawa) for grinding operations to get the desired d50.

**Preparation of a heat treated dry plant meal dispersion**

From 20 wt% to 30 wt% of heat treated ground material (based on the targeted solid content accounting of the residual water adsorbed in the material and determined previously with the dry content test) were added in tap water at ambient temperature (20°C) in a polypropylene beaker of 100mL. The dispersion is mixed using a deflocculating blade (10 blades of 49mm diameter, rod of 7mm diameter) for two minutes.

**Preparation of an adhesive composition**

Adhesives containing different plant raw material in tap water, polyamidoamine epichlorohydrin (PAE) resin (commercially named Soyad CA 1920, from Solenis, 20 wt% dry content and a water content of 80 wt%) and crude glycerol (vegetable glycerin 80 from Saipol, containing at least 80 wt% of glycerol) were formulated.

A pre-mix of all liquid products was first made with tap water, glycerol, and PAE resin. A mix of 47.37 wt% of glycerol in water was first blended at ambient temperature in a polypropylene beaker by using a deflocculating blade (10 blades of 49mm diameter, rod of 7mm diameter) for two minutes at 1000rpm until solution becomes homogeneous. Then PAE resin was added at a weight ratio glycerol:PAE 1:0.108 based on dry content. The mixture is blended until solution becomes homogeneous once again (no phase separation).

Then, thermally treated or untreated ground plant material was blended for 5 minutes at 1000 rpm with the pre-mix at a weight ratio glycerol:plant material of 1.5:1, based on dry content (residual water in the ground plant meal need to be took into account in the recipe) until an homogeneous dispersion is obtained.

Finally, the pH of the adhesive formulation is adjusted at 8.1 (±0.1) by addition of a solution of NaOH at 5mol/L.

**Preparation of particle boards at laboratory scale**

To manufacture laboratory particle boards, the adhesive composition is blended with wood particles using a planetary blender (pluton, mineapolis) with a paste impeller. An amount of 600g of wood is introduced in the blender tank after moisture content determination which is expected to be around 4.5% atro.

The adhesive composition is then weighed and introduced with a syringe to the wood furnish while the blender is running with the lowest speed. A 5 minutes mixing time is applied to ensure homogenous distribution of the glue with the wood furnish.

When a target moisture for wood furnish before pressing is required, water could be added to the wood before the adhesive. The adequate value is calculated by considering the targeted value to reach and removing from this calculation the water already adsorbed in the wood and the water contained in the adhesive composition. Standard targeted Mat (resin impregnated wood before hot pressing) moisture content value is about 10-12% atro. The real value will be checked after blending with the moisture analyzer equipment. At the end of this step, an impregnated wood sample ready to form a laboratory size particle board is obtained.

A 200 x 200 x 200 mm wood forming box is filled with impregnated wood (Wood+Adhesive+water) sample weighed to achieve a particle board with a density of 650 kg/m$^3$ at a thickness of 12mm (final thickness is obtained thanks to a stainless-steel mold of 12mm thick). After that, impregnated wood is cold pressed by hand to form a mat. The mat is hot pressed to a thickness of 12 mm for 5 minutes at a press platen temperature of 180°C. After pressing, thickness and weight of the particle board samples were measured and recorded for control. Then the particle board was placed in a conditioning room at 20°C and 65%r.h. (relative humidity) for at least one day. For each adhesive composition, 2 boards were made.

### Example 3: Determination of a lower temperature range

In a first step, it was evaluated if there is a minimum temperature to apply a thermal treatment and quantify any thermal barrier to overpass to get the treatment happening. The efficiency of the treatment is based on viscosity reduction versus a reference material not treated. Temperatures from room temperature to 105°C were tested. An overnight time for the treatment was chosen to ensure enough time to get something quantifiable. Viscosity was checked at solid content from 25 to 30 wt% to quantify benefits even if the current usage is closer to 20 wt% for value discrimination purpose. Dispersions having different solid contents prepared according to Example 2 (laboratory scale) from ground rapeseed meal having a d50 at 30μm were tested. The results are shown on Figure 2.

The results show that a treatment done at 50°C and 70°C has an insignificant influence on viscosity of these dispersions. However, the thermal treatment at 105°C overnight dramatically reduces the viscosity of ground meal dispersions whatever is the solid content (% dispersion). The biggest drops obtained thanks to thermal treatment were observed at high solid content. 105°C appears to be closed to the lower temperature limit to get an efficient thermal treatment.

### Example 4: Thermal treatment optimization

To optimize the thermal treatment, a small quantity of the same ground rapeseed meal was conditioned in an oven only 2h versus overnight, and dispersions were prepared with a solid content of 25 wt% (process according to Example 2, laboratory scale). The viscosity of the dispersions was measured and is indicated in Table 2.

Table 2: viscosity of dispersions prepared from ground rapeseed meal

| Temperature | Time | Viscosity (25% dispersion) |
|---|---|---|
| No treatment | | 1252 mPa.s |
| 105°C | 2h | 1252 mPa.s |
| 105°C | 12h | 200 mPa.s |

At 105°C, 2h was not enough to get a positive impact especially versus a 12h time as in Example 3. It highlights the need to move to higher temperature to shorten treatment time. The tests at higher temperatures were handle on rapeseed meal and pellets: heat treatment was done on the ground meal (after grinding) and on the meal pellets (before grinding). The viscosity of the dispersions (25 wt% solid content) prepared from rapeseed meal and rapeseed meal pellets are indicated in Tables 3 and 4 respectively.

Table 3: viscosity of dispersions prepared from rapeseed meal

| Rapeseed meal | | | | |
|---|---|---|---|---|
| **Process temperature** | **Process time (min)** | **Viscosity, 25% dispersion (m Pa.s)** | **Uncertainty** | **Relative viscosity, %** |
| 20°C | 0 | 495 | 74.25 | 100.0% |
| 120°C | 15 | 387 | 58.05 | 78.2% |
| | 30 | 322 | 48.3 | 65.1% |
| | 45 | 280 | 42 | 56.6% |
| 150°C | 15 | 161 | 24.15 | 32.5% |
| | 30 | 80 | 12 | 16.2% |
| | 45 | 64 | 9.6 | 12.9% |
| 200°C | 5 | 67 | 10.05 | 13.5% |

The first value (20°C, 0min) corresponds to the untreated sample. One can observe a different value than in Table 2 even if it is the same raw material origin obtained at a different period of time (495mPa.s vs. 1252 mPa.s). This difference is not surprising as Rapeseed is a natural product, its composition and characteristics are changing based on, for example, season, origin, process parameter, and induce viscosity variations.

At 120°C for a process time of 30 and 45 minutes, viscosity values are in between 322 to 280 mPa.s, evidencing a clear trend of viscosity reduction versus time to 57% of initial viscosity value.

At 150°C, viscosity values are even lower and in between 161 and 61 mPa.s. In other words, a treatment at 150°C for 15 min is more efficient than 120°C for 45min. At 150°C the viscosity drop from 160 to 80 mPa.s by increasing treatment time from 15 to 30min which correspond to 32% to 16% of the initial value. When the treatment time is increased to 45min, viscosity decreases to 67mPas i.e. 13% of the initial value. 150°C and 30min appears to be a good compromise between time and viscosity decrease at this stage.

At 200°C, only one treatment time was tested (5min), giving a value of 67mPa.s (13.5% of the initial value) which is equal to 150°C and 45min treatment. It is an even more efficient condition. However, at the laboratory scale it will be hard to control a so short treatment time. This condition is more suitable for a continues process rather than a batch process.

Same approach was conducted on Rapeseed meal pellets:

Table 4: viscosity of dispersions prepared from rapeseed meal pellets

| Rapeseed meal pellets | | | | |
|---|---|---|---|---|
| **Process temperature** | **Process time (min)** | **Viscosity, 25% dispersion (m Pa.s)** | **Uncertainty** | **Relative viscosity, %** |
| 20°C | 0 | 470 | 70.5 | 100.0% |
| 120°C | 15 | 272 | 40.8 | 57.9% |
| | 30 | 222 | 33.3 | 47.2% |
| | 45 | 204 | 30.6 | 43.4% |
| 150°C | 15 | 99 | 14.85 | 21.1% |
| | 30 | 58 | 8.7 | 12.3% |
| | 45 | 45 | 6.75 | 9.6% |

The reference product (20°C, 0min) has a viscosity of 470mPa.s, which is close to the previous value which correspond to the experimental error using the same material.

At 120°C, viscosity values are in between 272 and 200 mPa.s (58 to 43% of the initial value). It appears that viscosity reduction obtained on meal pellets is more significant than on ground meal.

At 150°C, viscosity reduction is close to 10% (for 30 and 45 min) which is close to what the values obtained with ground meal. It seems that the advantage of pellet shape versus ground meal depends on temperature.

No measurement was done at 200°C as it becomes too high. Pellets start to burn.

In conclusion, on powder meal, preferred temperature range will be 150 to 200°C to get a significant viscosity reduction. Higher is the temperature, lower is the time required to get the lowest viscosity possible. On meal pellets, even if heat treatment is better for intermediate temperature and intermediate performance, the preferred temperature range will also be 150 to 200°C.

**Example 5: Thermal treatment robustness: 150°C during 30min for various plant meals**

A clear benefit of thermal treatment has been observed with rapeseed meal with an optimum temperature in between 150 to 200°C and less than 30 min. The same set of experiments was carried out with another plant meal which is sunflower meal, dispersions being prepared with a solid content of 25 wt% (process according to Example 2, laboratory scale). Treatments have been done only on ground sunflower meal, the viscosity of the dispersions being indicated in Table 5.

Table 5: viscosity of dispersions prepared from sunflower meal

| Sunflower meal | | | | |
|---|---|---|---|---|
| Process temperature | Process time (min) | Viscosity, 25% dispersion (m Pa.s) | Uncertainty | Relative viscosity, % |
| 20°C | 0 | 64000 | 17920 | 100.0% |
| 150°C | 15 | 44500 | 12460 | 69.5% |
| | 30 | 14800 | 4144 | 23.1% |
| | 45 | 1796 | 502.88 | 2.8% |
| 175°C | 15 | 211 | 59.08 | 0.3% |
| | 30 | 70 | 19.6 | 0.1% |
| 200°C | 5 | 190 | 53.2 | 0.3% |
| | 15 | 46 | 12.88 | 0.1% |

The reference value is much higher for sunflower meal than for rapeseed meal for the same dry content, 64000 mPa.s versus 1200-500 mPa.s respectively.

At 150°C, a significant viscosity reduction to 23% and 3% of the initial value was observed for 30 and 45min treatment time respectively. There is a clear link between treatment time and viscosity reduction.

At 175°C, the effect is even more pronounced and it is possible to get viscosity values equivalent to heat treated rapeseed even if the reference viscosity of the sunflower meal dispersion is much higher. At 200°C, equivalent viscosity values could be achieved in a shorter time.

In conclusion, Sunflower meal needs a higher temperature to get viscosity values similar to rapeseed. However, with the same thermal treatment (same time and temperature), same level of viscosity reduction could be obtained. At 150°C for 30min, rapeseed exhibits a viscosity reduction of 12% while sunflower exhibits a viscosity reduction of 23%.

Even if thermal treatment needs to be adapted based on raw material origin, a temperature of 150°C and time of 30min was set for comparison purpose. At this setting any possible improvement brought by thermal treatment could be observed.

To check quickly the efficiency of thermal treatment, a quick test could be moisture measurement. In general, rapeseed meal pellet contains about 11 wt% moisture. When pellets are ground, the moisture content decreases based on the micronization process. This moisture content could range from 10 wt% to 6 wt% for an impact mill micronizer. This range is usually linked to the final particle size reduction: the dryer, the smaller. After the thermal treatment, the moisture content needs to be close to 0% (1% to 0%). If the value is higher, the thermal treatment was not done correctly and needs to be rerun. All products tested in the present Examples always had a moisture content lower than 1 wt%.

Dispersions with all samples (with and without thermal treatment) were made at several solid contents to account of their different behavior in term of processability while used (as observed in between Sunflower and Rapeseed). Results are summarized in the following Table 6, wherein the reduction of viscosity between untreated and heat treated material is indicated in parenthesis.

Table 6: Viscosity values (mPa.s) of raw materials in water dispersion for several solid contents with viscosity decrease percentage

| Solid content (wt%) | | 5% | 10% | 15% | 20% | 25% | 30% | 35% |
|---|---|---|---|---|---|---|---|---|
| Wheat draff | No treatment | | | | 58 | 275 | 2520 | |
| | 150°C/30min | | | | 48 (-17%) | 210 (-24%) | 800 (-68%) | |
| Corn draff | No treatment | | | | 60 | 200 | 930 | 5100 |
| | 150°C/30min | | | | | 60 (-70%) | 48 (-95%) | 230 (-95%) |
| Flaxseed meal | No treatment | 190 | 2920 | | | | | |
| | 150°C/30min | 20 (-89%) | 565 (-81%) | | | | | |
| Soy meal | No treatment | | 160 | 370 | 2200 | | | |
| | 150°C/30min | | 50 (-69%) | 40 (-89%) | 110 (-95%) | | | |
| Rapeseed cold-press (expeller) | No treatment | | | | 410 | 1600 | | |
| | 150°C/30min | | | | 40 (-90%) | 900 (-44%) | | |
| Soy protein concentrate | No treatment | | | 33 | 670 | 270000 | | |
| | 150°C/30min | | | 14 (-58%) | 62 (-91%) | 580 (-99%) | | |
| Soy protein isolate | No treatment | 40 | 15100 | | | | | |
| | 150°C/30min | 17 (-57%) | 50 (-99%) | | | | | |
| *Brassica carinata* meal | No treatment | | | 35 | 260 | 65000 | | |
| | 150°C/30min | | | 35 (0%) | 40 (-84%) | 850 (-99%) | | |

One can observe different behaviors from one product to another. All products (containing at least 15 wt% of proteins) exhibit a benefit of thermal treatment which leads to a dramatic reduction of viscosity. It appears that this reduction of viscosity is even more impressive for high protein content materials like soy protein concentrate and isolate. Aside of the impact of thermal treatment, it appears that material origin has an impact on viscosity while dispersed in water and, for this reason, solid content range has been adapted each time. High protein content material like soy protein isolate, soy protein concentrate, and soy meal can be processed only at a maximum of, respectively, 5%, 15% and 15% solid contents in weight percentages. When a thermal treatment is applied, this solid content could be increased up to respectively 10%, 20% and 20%. Other meals like rapeseed cold press cake and *Brassica carinata* meal can be processed at a higher solid content without thermal treatment up to respectively 15% and 20% and with thermal treatment up to respectively 20% and 20%.

Linseed meal exhibits a different behavior with a very low solid content to be processable (5 wt%).

In conclusion, the benefits of thermal treatment are not equal from one material to the another. It correlates partially to protein content in this investigated range.

**Example 6: Thermal treatment robustness: 150°C during 30min for rapeseed meal**

In order to confirm thermal treatment advantages, various rapeseed meal origins (lot number: GCXX-12/18 and LMXX-26/18) were tested with the same protocol as described in Example 2 (150°C and 30min, laboratory scale) to check if these parameters duly always decrease viscosity or need to be adjusted on a material origin. The protocol (150°C and 30min) has been re-applied on various grinded meal (various origin & granulometry) at 2 solid contents (23 wt% & 25 wt%). Only the results at 23 wt% solid content are presented on Figure 3 since same trends were found for both solid contents.

One can observe that meal origin affect viscosity (it has been confirmed with other meal origin). Granulometry d50 affect dramatically viscosity and processability consequently. When a thermal treatment is applied, it becomes harder to differentiate, based on viscosity values, meal origins or the impact of granulometry. It means that, thermal treatment, aside of bringing a general processability improvement thanks to viscosity reduction, could "erase" the impact of granulometry and meal origin.

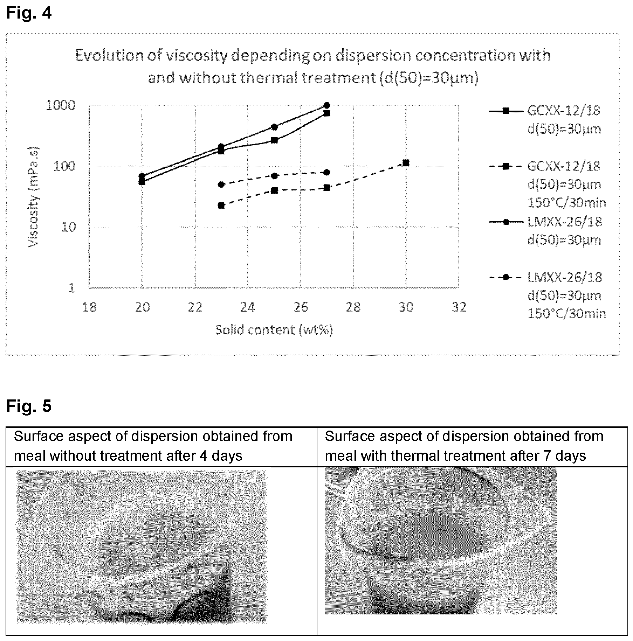

To extend these statements to other conditions, dispersions were prepared at different solid contents from rapeseed meals of different origins (GCXX-12/18 and LMXX-26/18) having a d50 at 30μm with and without thermal treatments. The viscosity of the dispersions was measured and is presented on Figure 4. Viscosity reduction was observed with solid content from 20 wt% to 27 wt% enabling to extent solid content range of usage up to 30 wt% (it was not possible to achieve a low enough viscosity to prepare dispersions at 30 wt% solid content from non-treated rapeseed meal).

Finally, all these laboratory results confirm interest of thermally treated ground rapeseed meal. The main benefit is a decrease of viscosity, which allows an improvement in the ease of use of adhesive. It also reduces meal origin impact on viscosity and thus the reduction of lot-to-lot variation.

**Example 7: Evaluation of microbiological stability**

To check the impact of thermal treatment, odor and surface aspect evolutions were monitored at a laboratory scale. It enables to assess the impact of thermal treatment on product stability. As all-natural products when dispersed in water, bacteria and fungi will start to develop and induce odor and a modification of the aspect of the dispersion. These evolutions are not desirable for customers and could impact performances. It was determined that, without any thermal treatment, odor starts to develop after 3 days. Consequently, any stop of the production system for more than 2 days requires a complete system flush and cleaning.

Evaluations presented in this Example were conducted with a 20 wt% solid rapeseed micronized meal dispersion in water (prepared according to Example 2: "Grinding and thermal treatment" at pilot scale) without stirring (at rest).

In order to quantify microbiological stability, the three tests described in Example 1 ("Raw material microbiological stability") were implemented to follow the evolution of the odor, surface appearance and biological activity of the dispersion.

The results regarding the odor and aspect of the dispersions are presented in Table 7 and Figure 5 respectively.

Table 7: Evaluation of the odor of dispersions of rapeseed meal

|  | J0 | J1 | J2 | J3 | J4 | J5 | J6 | J7 | J8 | J9 | J10 |
|---|---|---|---|---|---|---|---|---|---|---|---|
| Rapeseed meal without treatment | 1 |  |  | 4 | 5 |  | 5 | 5 |  |  | 5 |
| Rapeseed meal with temperature ramp up to 115°C in pilot dryer | 1 |  |  | 3 | 3 |  | 3 | 4 |  |  | 5 |

As observed in Table 7, the thermal treatment enables to delay odor appearance from 3 to 7 days. Moreover, surface aspect from pictures presented on Figure 5 is better with a dispersion using thermally treated rapeseed meal. No development of fungi or mould is observed after 7 days whereas it is noticeable after only 3 days with rapeseed meal without treatment. These two observations evidence a significant improvement of odor and aspect versus time in addition to an ease of use, for the present invention.

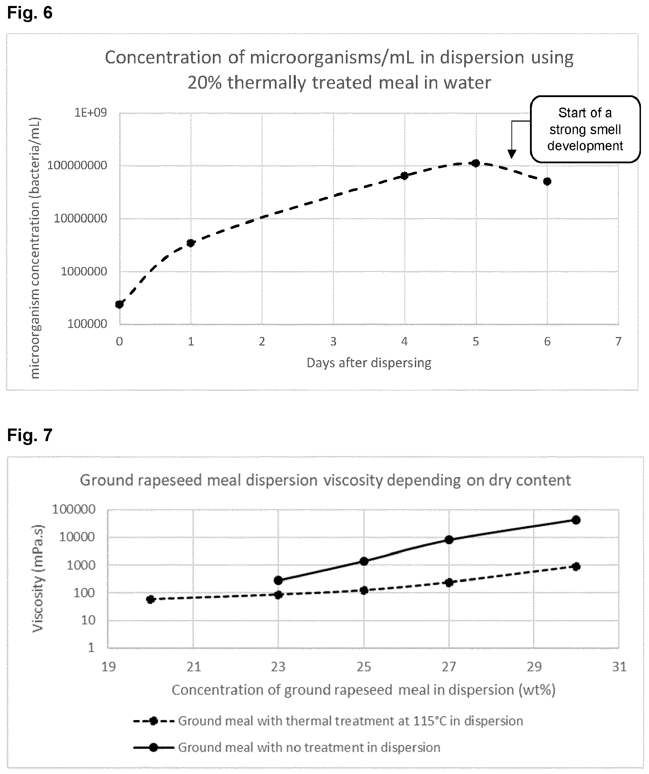

In order to confirm these results, an industrial scale batch (300L) has been done with thermally treated rapeseed meal at 20 wt% solid in water. To control the microbiological development, the ATP-metry method has been used and the results are shown on Figure 6.

Development of the strong odor of dispersion using thermally treated meal starts sooner at industrial scale (5 days) than at laboratory scale (7 days). There is a strong correlation between microorganism concentration curve and odor appearance.

**Example 8: Pilot scale: thermal treatment of pellets and then grinding**

This Example was conducted according to the procedure described in Example 2 (pilot scale).

Temperature of 115°C was applied on a sample of 450 kg.

Thermal treatment at pilot scale was handled by loading materiel in the dryer. Then, a temperature ramp was applied to achieve the targeted temperature. When the targeted temperature was achieved, heating is stopped to let the material cool down below 80°C to be able to condition it safely in bags. Then the material could be ground directly (still warm) or cooled to room temperature overnight. All treatments were done under atmospheric pressure and are summarized in Table 8.

Table 8: Treatment conditions of rapeseed meal pellets

| Raw material | Thermal treatment | | | Grinding conditions | Particle size | Flow rate kg/h | Viscosity of a 25 wt% ground rapeseed meal dispersion |
| --- | --- | --- | --- | --- | --- | --- | --- |
| | Temperature | Treated mass | Temperature profil | | | | |
| Rapeseed meal pellets GC 12/18-06 | / | / | / | cold pellets | 30μm | 80 | 1177 mPa.s |
| | 115°C | 450 kg | heating 101 min cooling 105 min | hot pellets | 30μm | 56 | 237 mPa.s |
| | | | | cold pellets | 30μm | 92.4 | |

When no thermal treatment is applied, mill throughput is about 80 kg/h. During the first heat test, the material was ground directly after the thermal treatment (115°C) while pellets were still warm (about 80°C). One can observe that the throughput is dramatically reduced to 56 kg/h. Once pellets are cooled down to room temperature (overnight) the throughput increases up to 92 kg/h.

The viscosity of dispersions prepared at 25 wt% solid content from rapeseed meal pellets treated as described above (and after cooling) was measured and is presented on Table 8. From this Table 8, decrease of viscosity can be observed when a thermal treatment is applied. It clearly demonstrates the efficiency of applying a thermal treatment on the viscosity reduction. The feasibility tests at the laboratory scale and at the pilot scale show that this treatment is able to decrease the viscosity.

Viscosity of the dispersion of ground rapeseed meal pellets has been measured at several solid contents versus the untreated material and the results are shown on Figure 7.

Once again, thermal treatment significantly decreases viscosity of ground rapeseed meal in dispersion with water for all solid contents from 23 to 30 wt%. An acceptable viscosity from the process point of view could be get to solid content up to 27 wt% versus untreated material where the maximum acceptable solid content is 23 wt%.

**Example 9: Pilot scale: grinding and then thermal treatment of pellets**

This Example was conducted according to the procedure described in Example 2 (pilot scale).

In this approach, pellets were first ground at an industrial scale, and then thermally treated into the same pilot dryer used previously. Tested parameters are the same as in Example 8. The main goal is to determine efficiency of this second approach and assess the impact of thermal treatment order. From the process point of view, this method was easier to handle (no cooling required) and gave the highest throughput.

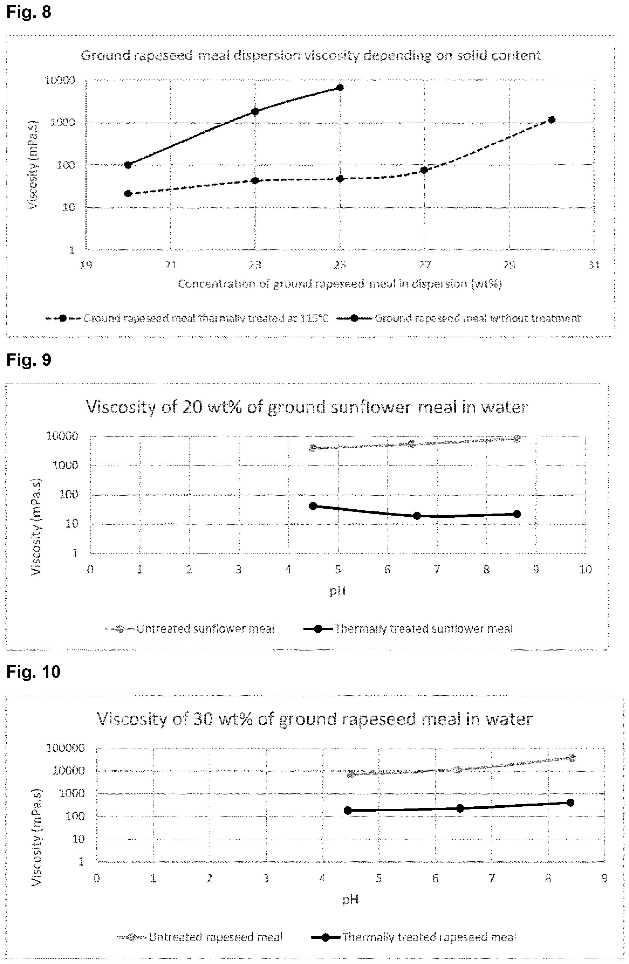

Viscosity curves of a dispersion of ground rapeseed meal (d(50) =30μm) without treatment and with a thermal treatment at 115°C were made, the solid content varying between 20 wt% and 30 wt%. The results are shown on Figure 8.

Again, thermal treatment significantly decreases viscosity of ground rapeseed meal in dispersion with water at a comparable level than previously observed at laboratory scale from this experiment. However, it can be noted that this order is more effective than thermal treatment before grinding (see Example 8, Figure 7).

**Example 10: Viscosity of ground dry plant material in aqueous dispersion depending on pH of the dispersion**

• Preparation of dispersions

80g dispersions were prepared by adding from 20 wt% to 30 wt% of untreated or thermally treated (150°C for 30 minutes according to Example 2 at laboratory scale) ground plant material (based on the targeted solid content accounting of the residual water adsorbed in the material and determined previously with the dry content test described in Example 1) in tap water at ambient temperature in a polypropylene beaker of 100mL. Each dispersion is mixed using a deflocculating blade (10 blades of 49mm diameter, rod of 7mm diameter) for two minutes, and until an homogeneous dispersion is obtained. The particle size of the used ground materials is about $d(50)=30\mu m$. Then, the pH of the dispersion is adjusted by addition of a solution of NaOH at 5mol/L to increase pH, or by addition of a solution of HCl at 5mol/L to decrease pH.

• Results

Viscosity of dispersions made with sunflower meal (20 wt% dispersion in water) and rapeseed meal (30 wt% dispersion in water) was measured using the rheometer (within 15 minutes maximum) as described in Example 1, and is presented on Figure 9 for sunflower meal and on Figure 10 for rapeseed meal.

Viscosity of dispersions made with thermally treated ground sunflower or rapeseed meal is lower than viscosity of dispersions made with the corresponding untreated meals. Thus, the thermal treatment process contributes to improve processability of these ground plant-based dispersions by decreasing viscosity, whatever the pH of these dispersions.

## Example 11: Viscosity of adhesive compositions

To check if the benefit of viscosity reduction is kept for an adhesive composition, adhesive compositions were prepared as described in Example 2 ("Preparation of an adhesive composition"), with untreated or heat treated ground plant materials having different origins. When a heat treatment was applied, it was conducted as described in Example 2 (laboratory scale, 150°C, 30 min).

Viscosity of these adhesive compositions was measured using the rheometer, and is presented in Table 9:

Table 9: Viscosity values (mPa.s) of adhesive compositions comprising different ground plant materials

| Ground plant material used in adhesive composition | Untreated plant material | Thermally treated plant material |
|---|---|---|
| Sunflower meal | 11000 mPa.s | 360 mPa.s |
| Canola meal | 190 mPa.s | 150 mPa.s |
| Rapeseed meal | 280 mPa.s | 230 mPa.s |
| Wheat draff | 980 mPa.s | 270 mPa.s |

One can observe different behavior from one product to another. Sunflower meal exhibits a huge benefit of thermal treatment, which lead to a dramatic reduction of viscosity. The same trend was observed for adhesives using wheat draff. Thermal treatment of canola meal and rapeseed meal make also possible to decrease adhesive viscosity. However, viscosity of these adhesives with untreated meal was already low, therefore the treatment only slightly decreases the viscosity. Thermal treatment is effective for these raw materials, and in some cases, a very significant reduction in viscosity is observed.

## Example 12: End use performance evaluation

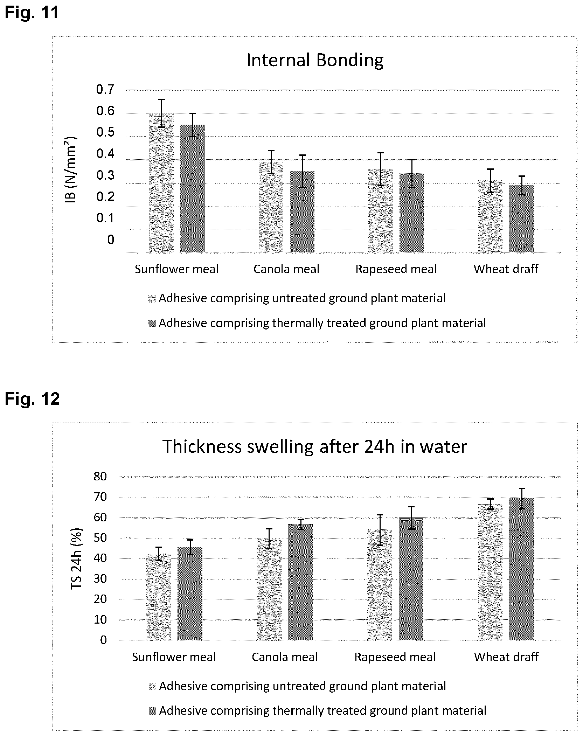

The adhesive compositions prepared in Example 10 are used in this Example 11 to make wood particle boards. The wood particle boards were prepared as described in Example 2 ("Preparation of particle boards at laboratory scale"). Based on 100 dry parts of wood particles, the added adhesive equivalent represents 6 parts of glycerol, 4 parts of ground plant-based material and 0.65 part of dry content PAE resin. The moisture content of the mat is around 11% atro. Then, internal bonding and thickness swelling were measured as described in Example 1, and are presented on Figures 11 and 12 respectively.

A no significant variation of the internal bonding due to thermal treatment is observed for all adhesives. Moreover, adhesives made with sunflower meal show the best performances.

For water resistance, untreated and thermally treated plant-based materials gave similar level of performance accounting standard deviation. However, an exception can be noted concerning adhesives made with canola meal, a slight decrease of the water resistance is observed. Sunflower meal gave the best water resistance performance, whereas the lowest water resistance is observed for adhesives based on wheat draff.

Finally, the processability of the adhesive can be improved for all of the studied ground plant-based material by applying a thermal treatment to them. This treatment has the ability to decrease adhesive viscosity, especially for adhesives based on ground sunflower meal, with no impact on mechanical performances and water resistance of wood particle boards.

**Claims**

1. Process for preparing an adhesive composition comprising the steps of:

   - providing a heat treated dry plant meal which is capable of reducing the viscosity of a dispersion in water of said heat treated dry plant meal compared to the same dispersion in water of the non heat treated dry plant meal, and
   - mixing the heat treated dry plant meal with water and a water soluble prepolymer and/or a water soluble reactive prepolymer to provide an adhesive composition.

2. Process for preparing an adhesive composition comprising the steps of:

   - providing a dry plant meal heat treated at a temperature of at least 100°C, and
   - mixing the heat treated dry plant meal with water and a water soluble prepolymer and/or a water soluble reactive prepolymer to provide an adhesive composition.

3. Process according to claim 1 or 2, wherein the temperature of the heat treatment is at least 115°C, preferably at least 135°C, more preferably, at least 150°C.

4. Process according to any one of claims 1 to 3, wherein the dry plant meal comprises at least 15 wt% of proteins, on the total weight of the dry plant meal.

5. Process according to any one of claims 1 to 4, wherein the dry plant meal has a granulometry d50 of at least 20 $\mu$m.

6. Process according to any one of claims 1 to 5, wherein the dry plant meal is submitted to a heat treatment during at least 5 minutes.

7. Process for preparing an article with the adhesive composition prepared according to any one of claims 1 to 6, further comprising a step of contacting the adhesive composition with a lignocellulosic material to provide lignocellulosic material impregnated with the adhesive composition.

8. Adhesive composition comprising a heat treated dry plant meal, water and a water soluble prepolymer and/or a water soluble reactive prepolymer.

9. Adhesive composition according to claim 8, the adhesive composition being sprayable.

10. Use of a heat treated dry plant meal for improving processability of an adhesive composition.

11. Use of a heat treated dry plant meal for stabilizing an adhesive composition comprising water and a water soluble prepolymer and/or water soluble reactive prepolymer.

EP 3 971 255 A1

**Fig. 1**

Visual aspect:    « **OK** »            « **Fair** »            « **Bad** »

**Fig. 2**

Ground rapeseed meal

Viscosity (mPa.s) vs % dispersion

- --■-- no treatment
- --●-- 50°C overnight
- --◆-- 70°C overnight
- --▲-- 105°C overnight

**Fig. 3**

23 wt% solid content

Viscosity (mPa.s) vs Granulometry d(50)

- ──■── GCXX-12/18
- ──●── LMXX-26/18
- --■-- GCXX-12/18 (150°C/30min)
- --●-- LMXX-26/18 (150°C/30min)

EP 3 971 255 A1

## Fig. 4

Evolution of viscosity depending on dispersion concentration with and without thermal treatment (d(50)=30μm)

Legend:
- GCXX-12/18 d(50)=30μm
- GCXX-12/18 d(50)=30μm 150°C/30min
- LMXX-26/18 d(50)=30μm
- LMXX-26/18 d(50)=30μm 150°C/30min

Y-axis: Viscosity (mPa.s)
X-axis: Solid content (wt%)

## Fig. 5

| Surface aspect of dispersion obtained from meal without treatment after 4 days | Surface aspect of dispersion obtained from meal with thermal treatment after 7 days |
| --- | --- |
| | |

**Fig. 6**

Concentration of microorganisms/mL in dispersion using 20% thermally treated meal in water

**Fig. 7**

Ground rapeseed meal dispersion viscosity depending on dry content

**Fig. 8**

Ground rapeseed meal dispersion viscosity depending on solid content

Viscosity (mPa.S) vs Concentration of ground rapeseed meal in dispersion (wt%)

- - ●- - Ground rapeseed meal thermally treated at 115°C   ——●—— Ground rapeseed meal without treatment

**Fig. 9**

Viscosity of 20 wt% of ground sunflower meal in water

Viscosity (mPa.s) vs pH

——●—— Untreated sunflower meal   ——●—— Thermally treated sunflower meal

**Fig. 10**

Viscosity of 30 wt% of ground rapeseed meal in water

Viscosity (mPa.s) vs pH

——●—— Untreated rapeseed meal   ——●—— Thermally treated rapeseed meal

EP 3 971 255 A1

**Fig. 11**

Internal Bonding

**Fig. 12**

Thickness swelling after 24h in water

Europäisches
Patentamt

European
Patent Office

Office européen
des brevets

**EUROPEAN SEARCH REPORT**

Application Number

EP 20 30 6039

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2017/055554 A1 (EVERTREE [FR]) 6 April 2017 (2017-04-06) * page 11; examples * | 1-9 | INV. C09J189/00 |
| X | WANG YING ET AL: "Effects of preheating treatment on thermal property and adhesion performance of soy protein isolates", JOURNAL OF ADHESION SCIENCE AND TECHNOLOGY, vol. 21, no. 15, 1 January 2007 (2007-01-01), pages 1469-1481, XP055779049, GB ISSN: 0169-4243, DOI: 10.1163/156856107782844756 Retrieved from the Internet: URL:https://www.tandfonline.com/doi/pdf/10.1163/156856107782844756> * paragraph [0002] - paragraph [0004] * | 10 | |
| X | US 2013/224482 A1 (BRADY RICHARD L [US] ET AL) 29 August 2013 (2013-08-29) * paragraph [0023]; table II * | 11 | TECHNICAL FIELDS SEARCHED (IPC) C09J |
| A,D | WO 2011/156380 A2 (BIOPOLYMER TECHNOLOGIES LTD [IL]; PARKER ANTHONY A [US] ET AL.) 15 December 2011 (2011-12-15) * claims; examples * | 1-11 | |

The present search report has been drawn up for all claims

| Place of search | Date of completion of the search | Examiner |
|---|---|---|
| Munich | 24 February 2021 | Vaccaro, Eleonora |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 20 30 6039

This annex lists the patent family members relating to the patent documents cited in the above-mentioned European search report.
The members are as contained in the European Patent Office EDP file on
The European Patent Office is in no way liable for these particulars which are merely given for the purpose of information.

24-02-2021

| Patent document cited in search report | | | Publication date | Patent family member(s) | | | Publication date |
|---|---|---|---|---|---|---|---|
| WO 2017055554 | A1 | | 06-04-2017 | FR | 3041967 | A1 | 07-04-2017 |
| | | | | WO | 2017055554 | A1 | 06-04-2017 |
| US 2013224482 | A1 | | 29-08-2013 | NONE | | | |
| WO 2011156380 | A2 | | 15-12-2011 | CA | 2801262 | A1 | 15-12-2011 |
| | | | | DK | 2576661 | T3 | 20-03-2017 |
| | | | | EP | 2576661 | A2 | 10-04-2013 |
| | | | | EP | 3165556 | A2 | 10-05-2017 |
| | | | | ES | 2619849 | T3 | 27-06-2017 |
| | | | | HU | E032196 | T2 | 28-09-2017 |
| | | | | LT | 2576661 | T | 10-04-2017 |
| | | | | PL | 2576661 | T3 | 31-07-2017 |
| | | | | RU | 2012156889 | A | 20-07-2014 |
| | | | | US | 2011311833 | A1 | 22-12-2011 |
| | | | | US | 2015203730 | A1 | 23-07-2015 |
| | | | | US | 2017066952 | A1 | 09-03-2017 |
| | | | | US | 2018134934 | A1 | 17-05-2018 |
| | | | | US | 2020079983 | A1 | 12-03-2020 |
| | | | | WO | 2011156380 | A2 | 15-12-2011 |

EPO FORM P0459

For more details about this annex : see Official Journal of the European Patent Office, No. 12/82

**REFERENCES CITED IN THE DESCRIPTION**

**Patent documents cited in the description**

- WO 2011156380 A
- US 20100233481
- US 20100240806 A
- US 20100282422 A
- WO 02070215 A
- US 6713168 B